# EUROPÄISCHE PATENTSCHRIFT

(11) **EP 2 836 529 B1**
(45) Veröffentlichungstag und Bekanntmachung des Hinweises auf die Patenterteilung: **28.03.2018**
(21) Anmeldenummer: 13723007.4
(22) Anmeldetag: 03.04.2013
(51) Int. Cl.: C08G 8/28, C04B 24/00, C07D 307/00, C08J 5/00, C07C 59/00, C08G 12/40, C08G 16/02, C08K 13/00

(54) **POLYKONDENSATIONSPRODUKT AUF BASIS VON AROMATISCHEN VERBINDUNGEN, VERFAHREN ZU SEINER HERSTELLUNG UND SEINE VERWENDUNG**
POLYCONDENSATION PRODUCT BASED ON AROMATIC COMPOUNDS, METHOD FOR THE PREPARATION AND USE THEROF
PRODUIT DE POLYCONDENSATION À BASE DE COMPOSÉS AROMATIQUES, SON PROCÉDÉ DE FABRICATION ET SON UTILISATION

(30) Priorität: 11.04.2012 EP 12163706
(43) Veröffentlichungstag der Anmeldung: 18.02.2015
(60) Teilanmeldung: 17206620.1
(73) Patentinhaber: Construction Research & Technology GmbH, 83308 Trostberg (DE)
(72) Erfinder: DIERSCHKE, Frank, 55276 Oppenheim (DE); GÄDT, Torben, 83278 Traunstein (DE); GEHRIG, Uwe, 83368 St. Georgen (DE); MELCHART, Michael, 67067 Ludwigshafen (DE); VIERLE, Mario, 83512 Wasserburg (DE); SCHWESIG, Peter, 82512 Wasserburg (DE); HARTL, Klaus, 83342 Tacherting (DE); STEFAN, Madalina, Andreea, 83308 Trostberg (DE); MITKINA, Tatiana, 83278 Traunstein (DE); PULKIN, Maxim, 83022 Rosenheim (DE)
(74) Vertreter: BASF IP Association
(86) Internationale Anmeldenummer: PCT/EP2013/056761
(87) Internationale Veröffentlichungsnummer: WO 2013/152963

(56) Entgegenhaltungen:
- WO-A1-2010/026155
- WO-A1-2010/040612
- WO-A1-2011/026701
- DE-A1- 1 593 758
- DE-A1-102004 050 395
- DE-A1-102005 060 947
- US-A1- 2011 054 053

## Beschreibung

Die vorliegende Erfindung betrifft ein Polykondensationsprodukt, umfassend als Monomerkomponenten mindestens einen Arylpolyoxyalkylenether, mindestens eine vicinal disubstituierte aromatische Verbindung, mindestens einen Aldehyd sowie weitere aromatische Verbindungen; Verfahren zu deren Herstellung sowie deren Verwendung als Dispergiermittel für wässrige Suspensionen von anorganischen Bindemitteln und als Mahlhilfsmittel für anorganische Bindemittel.

Portlandzement wurde erstmals im Britischen Patent BP 5022 erwähnt und wurde seither ständig weiterentwickelt. Er gilt heute als eines der verbreitetsten anorganischen Bindemittel. Portlandzement härtet auf Grund seines hohen Gehalts an CaO hydraulisch.

Bestimmte Schlacken aus metallurgischen Verfahren können als latent hydraulische Bindemittel als Zumischungen zu Portlandzement verwendet werden. Auch eine Aktivierung mit starken Alkalien wie z.B. Alkalimetallhydroxiden oder Wassergläsern ist möglich.

Anorganische Bindemittelsysteme, basierend auf reaktionsfähigen wasserunlöslichen Verbindungen auf der Basis von SiO₂ in Verbindung mit Al₂O₃, die in wässrig alkalischem Medium aushärten, sind ebenfalls allgemein bekannt. Solche ausgehärtete Bindemittelsysteme werden auch "Geopolymere" genannt und sind z.B. in US 4,349,386, WO 85/03699 und US 4,472,199 beschrieben.

Als reaktionsfähiges Oxidgemisch können dabei u.a. Metakaolin, Microsilica, Schlacken, Flugaschen, aktivierter Ton, Puzzolane oder Mischungen daraus eingesetzt werden. Das alkalische Medium zur Aktivierung der Bindemittel besteht üblicherweise aus wässrigen Lösungen von Alkalicarbonaten, Alkalifluoriden, Alkalihydroxiden, Alkalialuminaten und/oder Alkalisilikaten wie z.B. löslichem Wasserglas. Im Vergleich zu Portlandzement können Geopolymere kostengünstiger und beständiger sein und eine günstigere CO₂-Emissionsbilanz aufweisen.

In wässrigen Zementsuspensionen werden oft Zusatzmittel in Form von Dispergiermitteln zugesetzt, um deren Verarbeitbarkeit wie z.B. Knetbarkeit, Fließfähigkeit, Spritzbarkeit, Streichfähigkeit oder Pumpbarkeit zu verbessern. Diese Zusatzmittel sind in der Lage, durch Adsorption an die Oberfläche der Teilchen Agglomerate aufzubrechen und die gebildeten Teilchen zu dispergieren. Dies führt insbesondere bei hochkonzentrierten Dispersionen zu einer deutlichen Verbesserung der Verarbeitbarkeit.

Bei der Herstellung von zementhaltigen Baustoffmischungen wie Beton lässt sich dieser Effekt besonders vorteilhaft nutzen, da zur Erzielung einer gut verarbeitbaren Konsistenz ansonsten wesentlich mehr Wasser benötigt würde, als für den nachfolgenden Hydratationsprozess erforderlich wäre. Durch dieses nach dem Erhärten allmählich verdunstende überschüssige Wasser bleiben Hohlräume zurück, welche die mechanische Festigkeit und Beständigkeit der Baukörper signifikant verschlechtern. Die besagten Fließmittel bzw. Dispergiermittel werden eingesetzt, um den im Sinne der Hydratation überschüssigen Wasseranteil zu reduzieren und/oder die Verarbeitbarkeit bei einem vorgegebenen Wasser-Zementwert zu optimieren.

Beispiele für die bisher hauptsächlich verwendeten Zementdispergiermittel bzw. Fließmittel sind Salze von Naphthalinsulfonsäure/Formaldehyd-Kondensaten (vgl. EP 214412 A1, im Folgen als Naphthalinsulfonate bezeichnet), Salze von Melaminsulfonsäure/Formaldehyd-Kondensaten (vgl. DE 1671017 A, im Folgenden als Melaminsulfonate bezeichnet), sowie Salze von Polycarbonsäuren (vgl. US 5,707,445 B1, EP 1110981 A2, EP 1142847 A2; im Folgenden als Polycarboxylate bezeichnet). Solche Polycarboxylate werden meist durch radikalische Copolymerisation von ethylenisch ungesättigten Carbonsäuren (wie z.B. Acrylsäure, Methacrylsäure oder Maleinsäure bzw. deren Salze) und Poly(alkylenoxiden) mit einer polymerisierbaren Endgruppe (wie z.B. Methacrylate, Allylether oder Vinylether) hergestellt. Diese Herstellungsweise führt zu Polymeren mit einer kammartigen Struktur.

Die Wirksamkeit der verwendeten Moleküle beruht auf zwei unterschiedlichen Effekten. Zum einen adsorbieren die negativ geladenen Säuregruppen der Fließmittel auf der durch Calciumionen positiv geladenen Zementkornoberflaeche. Die so entstehende elektrostatische Doppelschicht führt zu einer elektrostatischen Abstoßung zwischen den Partikeln, die jedoch relativ schwach ist. Im Fall der oben erwähnten Kammpolymere wird diese elektrostatische Abstoßung durch den sterischen Anspruch der nicht adsorbierenden Poly(alkylenoxid)-Ketten zusätzlich verstärkt. Diese sterische Abstoßung ist sehr viel stärker als die elektrostatische Abstoßung, so dass leicht zu erklären ist, warum die Verflüssigungswirkung der Polycarboxylate sehr viel stärker ist als die der Naphthalin- oder Melaminsulfonate, d.h. um eine vergleichbare Verflüssigung zu erzielen, kann das Polycarboxylat deutlich niedriger dosiert werden.

In WO 2006/042709 A1 wird ein Polykondensationsprodukt beschrieben, bestehend aus A) einer aromatischen oder heteroaromatischen Verbindung mit 5 bis 10 C-Atomen bzw. Heteroatomen, wobei diese Verbindung im Durchschnitt 1 bis 300 Oxyethylen- und/oder Oxypropylen-Gruppen pro Molekül besitzt, die über ein O- oder N-Atom mit der aromatischen oder heteroaromatischen Verbindung verknüpft sind; sowie ggf. B) einer aromatischen Verbindung, ausgewählt aus der Gruppe Phenole, Phenolether, Naphthole, Naphtholether, Aniline, Furfurylalkohole und/oder eines Aminoplastbildners ausgewählt aus der Gruppe Melamin(-Derivate), Harnstoff-Derivate) und Carbonsäureamide; und C) einem Aldehyd ausgewählt aus der Gruppe Formaldehyd, Glyoxylsäure und Benzaldehyd oder Mischungen davon, wobei der Benzaldehyd noch Säuregruppen in Form von COOMₐ, SO₃Mₐ und PO₃Mₐ aufweisen kann und M = H, Alkali- oder Erdalkalimetall, Ammonium oder organische Aminreste sowie a = ½, 1 oder 2 bedeuten können. Es wurde gefunden, dass dieses Polykondensationsprodukt eine sehr gute Verflüssigung hydraulischer Bindemittel wie z.B. Zement, bewirkt. Es führt gegenüber Naphthalinsulfonaten oder Melaminsulfonaten zu einer wesentlich besseren Verflüssigung des Baustoffes bei gleichzeitig geringerer Dosierung, wobei die Fließfähigkeit über einen längeren Zeitpunkt aufrecht erhalten werden kann. Allerdings werden in WO 2006/042709 A1 als Komponente B) im Gegensatz zur hier vorliegenden Erfindung keine vicinal disubstituierten aromatischen Verbindungen beschrieben.

Ein weiteres Beispiel für ein Polykondensationsprodukt wird in EP 0780348 A1 als Dispergiermittel für Zement beschrieben. Darin werden u.a. alkoxyliertes Phenol und Hydroxybenzoesäuren in Gegenwart von Formaldehyd einer Polykondensation unterworfen.

Die eingangs erwähnten Geopolymere weisen deutliche Unterschiede zu den zementären Systemen auf, die den Einsatz der besagten Fließmittel erschweren bzw. unmöglich machen. Um akzeptable Erhärtungszeiten zu erhalten, benötigen die reaktiven Oxidkomponenten eine starke alkalische Aktivierung. Diese hohe Alkalinität stellt besondere Ansprüche an die Dispergiermittel, die bei vielen kommerziellen Betonfließmitteln nicht ausreichend gewährleistet ist. Des Weiteren weisen diese calciumarmen Systeme in der Regel keine positiv geladenen Kornoberflächen auf. Stattdessen handelt es sich um silikatische bzw. SiO₂-Oberflächen. Zudem stellt die zur Aktivierung erforderliche hohe Alkalinität auch eine hohe Salzfracht dar, welche eine bei niedrigeren pH-Werten (vergleichbar zum Zement) mögliche Dispersionswirkung wieder zunichtemachen kann.

DE 1593758 A beschreibt die Herstellung linearer Polykondensate aus Glykolmonophenylethern und Formaldehyd. WO 2011/026701 A1 beschreibt Polykondensate mit Isobutylen-Seitenkette. DE 102004050395 A1 beschreibt ein Polykondensationsprodukt auf Basis von aromatischen oder heteroaromatischen Verbindungen, Verfahren zu seiner Herstellung und dessen Verwendung. DE 102005060947 A1 beschreibt pulverförmige Polykondensationsprodukte. WO 2010/026155 A1 beschreibt eine fließmittelhaltige Erhärtungsbeschleunigerzusammensetzung. WO 2010/040612 A1 beschreibt ein phosphatiertes Polykondensationsprodukt, Verfahren zu dessen Herstellung und Verwendung. US 2011/054053 A1 beschreibt Additive in Gipsplatten sowie die Einstellung von deren Dimensionen.

Die Erfinder haben sich die Aufgabe gestellt, zumindest einige der Nachteile des oben diskutierten Standes der Technik im Wesentlichen zu vermeiden. Insbesondere sollten Dispergiermittel gefunden werden, die in der Lage sind, bei höheren pH-Werten an calciumarme Bindemittel zu adsorbieren und somit auch Geopolymersysteme zu verflüssigen. Diese Dispergiermittel sollten eine hohe Affinität zu silikatischen Oberflächen aufweisen, vorzugsweise auch bei sehr hohen pH-Werten. Sie sollte idealerweise auch zur Dispergierung von Mischsystemen geeignet sein, welche sowohl Portlandzement als auch Geopolymer-Rohstoffe wie z.B. Microsilica, Schlacken, Flugaschen, Tone, Puzzolane oder Mischungen daraus enthalten (sogenannte "supplemental cementitious materials" bzw. "SCM"), d.h. sie sollten auch für Kompositzemente der Kategorien CEM II-V sowie CEM X (derzeit noch nicht genormte Kompositzemente mit hohem Gehalt an SCM-Zusatzstoffen) geeignet sein.

Die oben genannten Aufgaben werden mit den Merkmalen der unabhängigen Ansprüche gelöst. Die abhängigen Ansprüche betreffen bevorzugte Ausführungsformen.

Es wurde überraschend gefunden, dass die erfindungsgemäßen Polykondensationsprodukte, welche mindestens eine vicinal disubstituierte aromatische Monomerkomponente wie z.B.

Brenzkatechin, Salicylsäure oder Dihydroxybenzoesäure in der Polymerkette enthalten, in der Lage sind, selbst bei höheren pH-Werten calciumarme anorganische Bindemittel, insbesondere Geopolymere zu dispergieren. Die über Etherbindungen gebundenen Polyoxyalkylengruppen sind zudem wesentlich hydrolysestabiler als die über Esterbindungen gebundenen Polyoxyalkylengruppen der bekannten Polycarboxylatether nach dem Stand der Technik. Völlig überraschend eignen sich die erfindungsgemäßen Polykondensationsprodukte auch als Mahlhilfsmittel für anorganische Bindemittel.

Gegenstand der vorliegenden Erfindung ist somit ein Polykondensationsprodukt, umfassend als Monomerkomponenten:
A) mindestens einen Arylpolyoxyalkylenether der Formel (I) 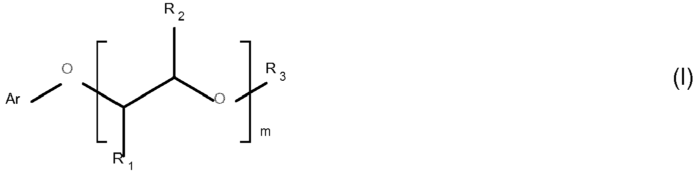 wobei
   - Ar: eine Arylgruppe ist,
   - R₁: und R₂ jeweils unabhängig voneinander aus H, Methyl und Ethyl ausgewählt sind, wobei vorzugsweise mindestens eine der Gruppen R₁ und R₂ = H ist,
   - m: eine ganze Zahl von 1 bis 300 ist und
   - R₃: aus der Gruppe, bestehend aus H, Alkyl, Aryl, Aralkyl, Alkaryl, Phosphat, sowie Mischungen davon ausgewählt ist;
B) mindestens eine aromatische Verbindung der Formel (II), 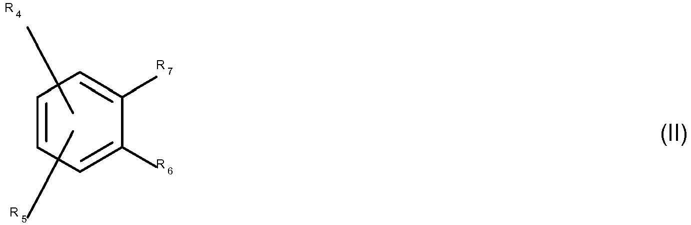 wobei R₄ und R₅ jeweils unabhängig voneinander aus H, R₈, OH, OR₈, C(O)R₈, COOH, COOR₈, SO₃H, SO₃R₈ und NO₂ sowie Alkali-, Erdalkali- und Ammoniumsalzen davon ausgewählt sind, oder zusammen einen weiteren anellierten Ring darstellen, wobei R₈ jeweils unabhängig aus der Gruppe, bestehend aus Alkyl, Aryl, Aralkyl, Alkaryl ausgewählt ist, und R₆ und R₇ jeweils unabhängig voneinander aus OH, OR₉, C(O)R₉, COOH und COOR₉ sowie Alkali- und Erdalkali- und Ammoniumsalzen davon ausgewählt sind, wobei Rg jeweils unabhängig aus der Gruppe, bestehend aus Alkyl, Aryl, Aralkyl, Alkaryl ausgewählt ist;
C) mindestens einen Aldehyd; sowie
D) mindestens eine weitere aromatische Verbindung, ausgewählt aus der Gruppe, bestehend aus Phenol, 2-Phenoxyethanol, 2-Phenoxyethylphosphat und -phosphonat, 2-Phenoxyessigsäure, 2-(2-Phenoxyethoxy)ethanol, 2-(2-Phenoxyethoxy)ethylphosphat und -phosphonat, 2-[4-(2-Hydroxyethoxy)phenoxy]ethylphosphat und -phosphonat, 2-[4-(2-Phosphonatooxyethoxy)phenoxy]ethylphosphat und -phosphonat, Methoxyphenol, Phenolsulfonsäure, Furfurylalkohol, sowie Mischungen davon.

Für den Fall, dass mindestens einer der Substituenten in der allgemeinen Formel (II) eine COOH -Gruppe ist, wird bevorzugt, dass die Gruppen R₆ und R₇ jeweils OH -Gruppen sind.

Die Arylgruppe "Ar" ist eine Homo- oder Heteroarylgruppe, vorzugsweise eine Homoarylgruppe, mit 6 bis 10 Kohlenstoffatomen im Ringsystem, insbesondere eine Phenyl- oder eine Naphthylgruppe. Die Gruppe Ar kann noch mit einer oder mehreren weiteren Gruppen substituiert sein, welche aus C₁₋₁₀-Alkyl, C₁₋₁₀-Alkoxy, C₆₋₁₀-Aryl, C₇₋₁₁-Aralkyl, C₇₋₁₁-Alkaryl ausgewählt sind, vorzugsweise Methoxy.

Die Zahl "m" ist vorzugsweise eine ganze Zahl von 3 bis 280, weiter bevorzugt von 10 bis 160 und insbesondere von 12 bis 120.

"R₃" ist vorzugsweise aus der Gruppe, bestehend aus H, C₁₋₁₀-Alkyl, C₆₋₁₀-Aryl, C₇₋₁₁-Aralkyl, C₇₋₁₁-Alkaryl und Phosphat ausgewählt, wobei R₃ insbesondere H ist.

Die Oxyalkylengruppen des Arylpolyoxyalkylenethers der Formel (I) sind vorzugsweise aus Ethylenoxid- und/oder Propylenoxidgruppen ausgewählt, welche statistisch, alternierend, graduell und/oder blockweise entlang der Polyoxyalkylen-Kette angeordnet sind.

Besonders bevorzugt ist der Arylpolyoxyalkylenether der Formel (I) ein Polyethylenglykol-monophenylether der Formel (III), 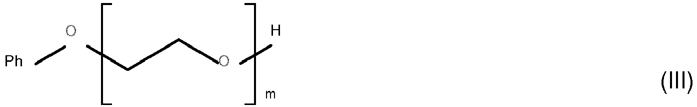 wobei m die angegebene Bedeutung aufweist.

Bei diesem Polyethylenglykol-monophenylether der Formel (III) kann es sich um ein Gemisch mit unterschiedlichen m-Werten innerhalb der vorstehend angegebenen Bedeutung handeln.

Die vorstehend genannten Gruppen "R₈" und "Rg" sind vorzugsweise jeweils unabhängig voneinander aus C₁₋₁₀-Alkyl, C₆₋₁₀-Aryl, C₇₋₁₁-Aralkyl und C₇₋₁₁-Alkaryl ausgewählt und sind insbesondere = H.

Gemäß besonders bevorzugten Ausführungsformen sind die aromatischen Verbindungen der Formel (II) aus der Gruppe, bestehend aus Benzen-1,2-diol, Benzen-1,2,3-triol, 2-Hydroxybenzoesäure, 2,3- und 3,4-Dihydroxybenzoesäure, 3,4,5-Trihydroxybenzoesäure, Phthalsäure, 3-Hydroxyphthalsäure, 2,3- und 3,4-Dihydroxybenzolsulfonsäure, 1,2- und 2,3-Dihydroxynaphthalin, 1,2- und 2,3-Dihydroxynaphthalin-5- oder -6-sulfonsäure, sowie Mischungen davon ausgewählt.

Insbesondere sind hierbei Benzen-1,2-diol, Benzen-1,2,3-triol, 2,3- und 3,4-Dihydroxybenzoesäure, 2,3- und 3,4-Dihydroxybenzolsulfonsäure, 1,2- und 2,3-Dihydroxynaphthalin, 1,2- und 2,3-Dihydroxynaphthalin-5- oder -6-sulfonsäure, sowie Mischungen davon, bevorzugt, während z.B. 2-Hydroxybenzoesäure weniger bevorzugt ist.

Auch hier sind, wie bereits allgemein zur Komponente B ausgeführt, Alkali-, Erdalkali- und Ammoniumsalze der entsprechenden Säuren möglich. Im Sinne der vorliegenden Erfindung sollen unter "Ammoniumsalzen" sowohl NH₄⁺-Salze als auch Salze von Aminen oder stickstoffhaltigen Polymeren wie etwa Polyethyleniminsalzen verstanden werden. Zudem ist es im Hinblick auf das fertige Polykondensationsprodukt gleichwertig, ob die besagten aromatischen Verbindungen direkt als Salze eingesetzt werden oder ob diese Salze erst im Anschluss an eine saure Polykondensation durch Neutralisation erhalten werden. Bei sehr hohen pH-Werten, wie sie im Bereich der Geopolymere anzutreffen sind, können die Amine bzw. stickstoffhaltigen Polymere auch in freier Form vorliegen.

Die Aldehyd-Komponente C) ist vorzugsweise aus der Gruppe, bestehend aus Formaldehyd, Paraformaldehyd, Glyoxylsäure, Benzaldehyd, Benzaldehydsulfonsäure, Benzaldehyddisulfonsäure, Vanillin und Isovanillin, sowie Mischungen davon ausgewählt. Formaldehyd als solcher oder in Form von Paraformaldehyd ist hierbei besonders bevorzugt.

Die Monomerkomponenten A, B, C und D (abzüglich des bei der Polykondensationsreaktion gebildeten Wassers) liegen im erfindungsgemäßen Polykondensationsprodukt in bestimmten molaren Mengenverhältnissen vor. So beträgt das Molverhältnis der Komponente C:(A+B) vorzugsweise 1:3 bis 3:1, besonders bevorzugt 1:2 bis 2:1 und insbesondere 1:0,9 bis 1:1,1.

Das Molverhältnis der Komponenten A:B beträgt vorzugsweise 1:10 bis 10:1, besonders bevorzugt 1:7 bis 5:1 und insbesondere 1:5 bis 3:1.

Das erfindungsgemäße Polykondensationsprodukt liegt vorzugsweise in Form eines Kammpolymers mit Novolak-Struktur. Mit anderen Worten sind im Falle von Formaldehyd als Aldehyd-Komponente die aromatischen Monomerkomponenten mittels -CH₂- Gruppen untereinander verbunden, da, wie weiter unten ausgeführt wird, die Polykondensationsreaktion vorteilhaft im Sauren durchgeführt wird. Es ergeben sich Molekulargewichte der Polykondensationsprodukte, die bevorzugt im Bereich von 1000 bis 100000, besonders bevorzugt im Bereich von 2000 bis 75000 und insbesondere im Bereich von 4000 bis 50000 g/mol liegen.

Ein weiterer Gegenstand der vorliegenden Erfindung ist ein Verfahren zur Herstellung des erfindungsgemäßen Polykondensationsprodukts, welches dadurch gekennzeichnet ist, dass die Komponenten A), B), C) und D) in wässriger Lösung bei einer Temperatur von 20 bis 140 °C und einem Druck von 1 bis 10 bar polykondensiert werden.

Falls als Monomerkomponente B, C oder D keine hinreichend starke Säure eingesetzt wird, empfiehlt sich die Verwendung eines sauren Katalysators. Als saurer Katalysator kann eine Säure, ausgewählt aus der Gruppe, bestehend aus Schwefelsäure, Methansulfonsäure, p-Toluolsulfonsäure, Oxalsäure und Phosphorsäure, sowie Mischungen davon eingesetzt werden.

Im Anschluss an die erfindungsgemäße Umsetzung kann das Reaktionsgemisch einer Nachbehandlung bei einem pH-Wert von 8,0 bis 13,0, einer Temperatur von 60 bis 120 °C und vorzugsweise einem Druck von 0,01 bis 0,9 bar unterworfen werden, insbesondere um den Gehalt an unumgesetzter, freier Aldehydkomponente zu reduzieren.

Der besagte pH-Wert kann durch Zugabe einer Lauge wie z.B. NaOH oder z.B. einem Polyethylenimin eingestellt werden und die während der Neutralisation gebildeten Salze werden zweckmäßig abgetrennt.

Ein weiterer Gegenstand der vorliegenden Erfindung ist die Verwendung des erfindungsgemäßen Polykondensationsprodukte als Dispergiermittel für wässrige Suspensionen von anorganischen Bindemitteln, ausgewählt aus der Gruppe, umfassend hydraulische Bindemittel, latent hydraulische Bindemittel, puzzolanische Bindemittel, alkaliaktivierte Alumosilikatbindemittel, sowie Mischungen davon.

Hierbei werden die besagten Bindemittel zweckmäßig aus folgenden Gruppen ausgewählt:
die hydraulischen Bindemittel aus Zementen, insbesondere aus Portlandzement und Aluminatzement, sowie Mischungen davon,
die latent hydraulischen Bindemittel aus industriellen und/oder synthetischen Schlacken, insbesondere aus Hochofenschlacke, Hüttensand, Hüttensandmehl, elektrothermischer Phosphorschlacke, Edelstahlschlacke, sowie Mischungen davon,
und die puzzolanischen Bindemittel aus amorpher Kieselsäure, vorzugsweise Fällungskieselsäure, pyrogener Kieselsäure und Mikrosilika, Glasmehl, Flugasche, vorzugsweise Braunkohleflugasche und Steinkohleflugasche, Metakaolin, natürlichen Puzzolanen wie Tuff, Trass und Vulkanasche, natürlichen und synthetischen Zeolithen, sowie Mischungen davon.

Portlandzement enthält ca. 70 Gew.-% CaO + MgO, ca. 20 Gew.-% SiO₂ und ca. 10 Gew.-% Al₂O₃ + Fe₂O₃. Aluminatzement ("High Alumina Cement") enthält ca. 20 bis 40 Gew.-% CaO, bis zu etwa 5 Gew.-% SiO₂, ca. 40 bis 80 Gew.-% Al₂O₃ und bis zu etwa 20 Gew.-% Fe₂O₃. Diese Zemente sind im Stand der Technik wohlbekannt.

Bei den Schlacken kann es sich sowohl um industrielle Schlacken, d.h. Abfallprodukte aus industriellen Prozessen, als auch um synthetisch nachgestellte Schlacken handeln. Letzteres ist vorteilhaft, da industrielle Schlacken nicht immer in gleichbleibender Menge und Qualität verfügbar sind.

Im Sinne der vorliegenden Erfindung soll unter einem latent hydraulischen Bindemittel vorzugsweise ein Bindemittel verstanden werden, bei dem das molare Verhältnis von (CaO + MgO) : SiO₂ zwischen 0,8 und 2,5 und besonders bevorzugt zwischen 1,0 und 2,0 liegt.

Hochofenschlacke, ein typisches latent hydraulisches Bindemittel, weist in der Regel 30 bis 45 Gew.-% CaO, ca. 4 bis 17 Gew.-% MgO, ca. 30 bis 45 Gew.-% SiO₂ und ca. 5 bis 15 Gew.-% Al₂O₃ auf, typischerweise ca. 40 Gew.-% CaO, ca. 10 Gew.-% MgO, ca. 35 Gew.-% SiO₂ und ca. 12 Gew.-% Al₂O₃. Die ausgehärteten Produkte weisen im Allgemeinen die Eigenschaften von hydraulisch ausgehärteten Systemen auf.

Hochofenschlacke ("blast furnace slag") ist ein Abfallprodukt des Hochofenprozesses. Hüttensand ("granulated blast furnace slag") ist granulierte Hochofenschlacke und Hüttensandmehl ("ground granulated blast furnace slag") fein pulverisierter Hüttensand. Das Hüttensandmehl variiert je nach Herkunft und Aufbereitungsform in seiner Mahlfeinheit und Korngrößenverteilung, wobei die Mahlfeinheit Einfluss auf die Reaktivität hat. Als Kenngröße für die Mahlfeinheit wird der sogenannte Blainewert herangezogen, welcher typischerweise in der Größenordnung von 200 bis 1000, vorzugsweise zwischen 300 und 500 m² kg⁻¹ liegt. Je feiner die Vermahlung ist, desto höher ist die Reaktivität.

Elektrothermische Phosphorschlacke ist ein Abfallprodukt der elektrothermischen Phosphorherstellung. Sie ist weniger reaktiv als Hochofenschlacke und enthält ca. 45 bis 50 Gew.-% CaO, ca. 0,5 bis 3 Gew.-% MgO, ca. 38 bis 43 Gew.-% SiO₂, ca. 2 bis 5 Gew.-% Al₂O₃ und ca. 0,2 bis 3 Gew.-% Fe₂O₃ sowie Fluorid und Phosphat. Edelstahlschlacke ist ein Abfallprodukt verschiedener Stahlerzeugungsverfahren mit stark variierender Zusammensetzung (siehe Caijun Shi, Pavel V. Krivenko, Della Roy, Alkali-Activated Cements and Concretes, Taylor & Francis, London & New York, 2006, S. 42-51).

Bei amorpher Kieselsäure handelt es sich vorzugsweise um eine röntgenamorphe Kieselsäure, d.h. um eine Kieselsäure, die im Pulverdiffraktionsverfahren keine Kristallinität zeigt. Die erfindungsgemäße amorphe Kieselsäure weist zweckmäßig einen Gehalt von mindestens 80 Gew.-%, vorzugsweise mindestens 90 Gew.-% SiO₂ auf. Fällungskieselsäure wird großtechnisch über Fällungsprozesse ausgehend von Wasserglas gewonnen. Fällungskieselsäure wird je nach Herstellungsverfahren auch Kieselgel genannt. Pyrogene Kieselsäure wird durch Umsetzung von Chlorsilanen wie z.B. Siliciumtetrachlorid in der Knallgasflamme erzeugt. Pyrogene Kieselsäure ist ein amorphes SiO₂-Pulver von 5 bis 50 nm Teilchendurchmesser und einer spezifischen Oberfläche von 50 bis 600 m²g⁻¹.

Mikrosilika, auch Silikastaub genannt, ist ein Nebenprodukt der Silicium- bzw. Ferrosiliciumherstellung und besteht ebenfalls größtenteils aus amorphem SiO₂-Pulver. Die Teilchen haben Durchmesser in der Größenordnung von 0,1 µm. Die spezifische Oberfläche liegt in der Größenordnung von 15 bis 30 m² g⁻¹. Demgegenüber ist handelsüblicher Quarzsand kristallin und weist vergleichsweise große Teilchen und eine vergleichsweise kleine spezifische Oberfläche auf. Er dient erfindungsgemäß als inerter Zuschlagsstoff.

Flugaschen entstehen u.a. beim Verbrennen von Kohle in Kraftwerken. Flugasche der Klasse C (Braunkohleflugasche) enthält gemäß WO 08/012438 ca. 10 Gew.-% CaO, während Flugasche der Klasse F (Steinkohleflugasche) weniger als 8 Gew.-%, vorzugsweise weniger als 4 Gew.-% und typischerweise ca. 2 Gew.-% CaO enthält.

Metakaolin entsteht bei der Dehydrierung von Kaolin. Während Kaolin bei 100 bis 200 °C physikalisch gebundenes Wasser abgibt, findet bei 500 bis 800 °C eine Dehydroxylierung unter Zusammenbruch der Gitterstruktur und Bildung von Metakaolin (Al₂Si₂O₇) statt. Reines Metakaolin enthält demgemäß ca. 54 Gew.-% SiO₂ und ca. 46 Gew.-% Al₂O₃.

Eine Übersicht weiterer, erfindungsgemäß geeigneter puzzolanischer Bindemittel findet sich z.B. bei Caijun Shi, Pavel V. Krivenko, Della Roy, Alkali-Activated Cements and Concretes, Taylor & Francis, London & New York, 2006, S.51-63. Die Prüfung auf Puzzolanaktivität kann nach DIN EN 196 Teil 5 erfolgen.

Das erfindungsgemäße Polykondensationsprodukt eignet sich also gemäß einer Ausführungsform als Dispergiermittel für alkaliaktivierte Alumosilikatbindemittel (Geopolymere). Gemäß einer anderen Ausführungsform eignet es sich zur Dispergierung von Mischsystemen, welche sowohl Portlandzement als auch Geopolymer-Rohstoffe wie z.B. Microsilica, Schlacken, Flugaschen, Tone, Puzzolane oder Mischungen daraus enthalten (sogenannte SCM), d.h. für Kompositzemente der Kategorien CEM II-V sowie CEM X. (Auch eine Verwendung als Dispergiermittel für reinen Portlandzement oder Aluminatzement (Kategorie CEM I) ist möglich, wenn auch wirtschaftlich nicht allzu interessant.)

Im Sinne der vorliegenden Erfindung werden unter "alkaliaktivierten Alumosilikatbindemitteln" Bindemittelsysteme verstanden, welche latent hydraulische und/oder puzzolanische Bindemittel gemäß vorstehender Definition sowie alkalische Aktivatoren wie z.B. wässrige Lösungen von Alkalicarbonaten, Alkalifluoriden, Alkalihydroxiden, Alkalialuminaten, Alkalisilikaten (wie z.B. löslichem Wasserglas) und/oder Mischungen davon umfassen. Demgegenüber werden unter "alkaliaktivierbaren Alumosilikatbindemitteln" Bindemittelsysteme der gleichen Art verstanden, welche zwar alkalisch aktivierbar sind aber noch nicht aktiviert wurden. In beiden Fällen sollte der Gehalt an Portlandzement bzw. Aluminatzement insgesamt unter 20 Gew.-%, vorzugsweise unter 10 Gew.-% gehalten werden, damit es nicht zu einer hydraulischen Härtung der Zementkomponente kommt. Des Weiteren soll im Sinne der vorliegenden Erfindung der trockene alkalische Aktivator bzw. der Feststoffgehalt des wässrigen alkalischen Aktivators dem anorganischen Bindemittel zugerechnet werden. Des Weiteren können auch Mischungen von trockenen alkalischen Aktivatoren und wässrigen alkalischen Aktivatoren vorteilhaft eingesetzt werden.

Das besagte Alkalisilikat ist zweckmäßig aus Verbindungen mit der empirischen Formel m SiO₂· n M₂O ausgewählt, wobei M für Li, Na, K und NH₄, sowie Mischungen davon steht, vorzugsweise für Na und K. Das molare Verhältnis m : n beträgt zweckmäßig 0,5 bis 4,0, vorzugsweise 0,6 bis 3,0 und insbesondere 0,7 bis 2,5. Bei dem Alkalisilikat handelt es sich bevorzugt um Wasserglas, besonders bevorzugt um ein flüssiges Wasserglas und insbesondere um ein Natrium- oder Kaliumwasserglas. Es können aber auch Lithium- oder Ammoniumwassergläser, sowie Mischungen der genannten Wassergläser eingesetzt werden.

Das oben angegebene Verhältnis von m:n (auch "Modul" genannt) sollte vorzugsweise nicht überschritten werden, da ansonsten keine vollständige Reaktion der Komponenten mehr zu erwarten ist. Es können auch geringere Module wie z.B. ca. 0,2 zur Anwendung kommen. Wassergläser mit höheren Modulen sollten vor der Anwendung mit einem geeigneten wässrigen Alkalihydroxid auf Module im erfindungsgemäßen Bereich eingestellt werden.

Kaliumwassergläser sind im zweckmäßigen Modulbereich vornehmlich als wässrige Lösungen im Handel, da sie stark hygroskopisch sind, Natriumwassergläser sind im zweckmäßigen Modulbereich kommerziell auch als Feststoffe erhältlich. Die Feststoffgehalte der wässrigen Wasserglaslösungen liegen in der Regel bei 20 Gew.-% bis 60 Gew.-%, vorzugsweise 30 bis 50 Gew.-%.

Wassergläser können industriell durch Schmelzen von Quarzsand mit den entsprechenden Alkalicarbonaten hergestellt werden. Sie können aber auch unschwer aus Mischungen reaktiver Kieselsäuren mit den entsprechenden wässrigen Alkalihydroxiden gewonnen werden. Es ist daher erfindungsgemäß möglich, zumindest einen Teil des Alkalisilikats durch eine Mischung aus einer reaktiven Kieselsäure und dem entsprechenden Alkalihydroxid zu ersetzen.

Das erfindungsgemäße Polykondensationsprodukt kann als Bestandteil von Baustoffrezepturen und/oder Baustofferzeugnissen wie Baustellenbeton, Betonfertigteilen, Betonwaren, Betonwerksteinen sowie Ortbeton, Spritzbeton, Transportbeton, Bauklebern und Wärmedämmverbundsystem-Klebern, Betonreparatursystemen, Einkomponenten- und Zweikomponenten-Dichtungsschlämmen, Estrichen, Spachtel- und Verlaufsmassen, Fliesenklebern, Putzen, Kleb- und Dichtstoffen, Beschichtungssystemen, insbesondere für Tunnel, Abwasserkanäle, Spritzschutz und Kondensatleitungen, Trockenmörteln, Fugenmörteln, Drainagemörteln und/oder Reparaturmörteln verwendet werden.

Die Dosierung der Dispergiermittel sollte bei Zementen der Kategorien CEM I-V sowie CEM X zweckmäßig im Bereich von 0,01 bis 2,0, bevorzugt von 0,05 bis 2,0 Gew.-%, bezogen auf die Summe der anorganischen Bindemittel, erfolgen. (Nicht mitgerechnet werden hier beispielsweise Füllstoffe und Aggregate, wie z.B. Sande und Kiese, sowie Wasser und weitere mögliche Zusatzstoffe.)

Im Falle der Verwendung des erfindungsgemäßen Polykondensationsprodukts als Dispergiermittel für alkaliaktivierte Alumosilikatbindemittel (Geopolymere) sollte indessen wegen der teilweise geringen Dosiereffizienz höher dosiert werden. Die Dosierung der Dispergiermittel sollte hier zweckmäßig im Bereich von 0,01 bis 10,0, bevorzugt von 0,02 bis 5,0 und insbesondere von 0,05 bis 3,0 Gew.-%, bezogen auf die Summe der anorganischen Bindemittel, erfolgen.

Ein weiterer Gegenstand der vorliegenden Erfindung ist die Verwendung des erfindungsgemäßen Polykondensationsprodukte als Mahlhilfsmittel für anorganische Bindemittel, ausgewählt aus der Gruppe, umfassend hydraulische Bindemittel, latent hydraulische Bindemittel und puzzolanische Bindemittel gemäß vorstehender Definition und/oder alkaliaktivierbare Alumosilikatbindemittel, sowie Mischungen davon.

Diese Mahlhilfsmittel erleichtern die Vermahlung von Zementen, wie z.B. Portlandzement und Aluminatzement, d.h. von Zementen der Kategorie CEM I, aber auch von Kompositzementen der Kategorien CEM II-V und CEM X, von latent hydraulischen Bindemitteln und puzzolanischen Bindemitteln, sowie von alkaliaktivierbaren Alumosilikatbindemitteln, welche gemäß vorstehender Definition trockene alkalische Aktivatoren enthalten.

Die Dosierung der Mahlhilfsmittel sollte hier zweckmäßig im Bereich von 0,005 bis 0,30, bevorzugt von 0,01 bis 0,05 Gew.-%, bezogen auf die Summe der anorganischen Bindemittel, erfolgen.

Die erfindungsgemäßen Dispergiermittel und Mahlhilfsmittel können zusammen mit weiteren Zusatzstoffen bzw. Hilfsmitteln, ausgewählt aus der Gruppe, umfassend Glykole, Polyalkohole, Aminalkohole, organische Säuren, Aminosäuren, Zucker, Melassen, organische und anorganische Salze, Polycarboxylatether, Naphthalinsulfonat, Melamin-Formaldehyd-Polykondensationsprodukte, Ligninsulfonat, sowie Mischungen davon, eingesetzt werden. Als weitere Additive kommen Entschäumer, Wasserretentionsmittel, Pigmente, Fasern, Dispersionspulver, Netzmittel, Verzögerer, Beschleuniger wie z.B. Calciumsilikathydrat, Komplexbildner, wässrige Dispersionen und Rheologiemodifizierer in Betracht.

Besonders erwähnenswert ist in diesem Zusammenhang, dass bei Verwendung der erfindungsgemäßen Dispergiermittel in Kombination mit handelsüblichen Polycarboxylatethern bei annähernd gleicher Dosiereffizienz eine deutlich schnellere Hydratation des Kompositzements erfolgt.

Die vorliegende Erfindung wird nun anhand der nachfolgenden Beispiele und der beigefügten Zeichnung genauer erläutert. Hierbei zeigt:
- Fig. 1: eine graphische Darstellung der Teilchengrößenverteilungen von Hüttensandmehl in Abhängigkeit vom verwendeten Mahlhilfsmittel bei Kaltvermahlung,
- Fig. 2: eine graphische Darstellung der Teilchengrößenverteilungen von Hüttensandmehl in Abhängigkeit vom verwendeten Mahlhilfsmittel bei Heißvermahlung.

### BEISPIELE

### Beispiel 1

Ein beheizbarer, mit Rührer und Dosierpumpe ausgestatteter Reaktor wird mit 320 Teilen Poly(ethylenoxid)monophenylether (mittleres Molekulargewicht 2000 g/mol), 49 Teilen 3,4-Dihydroxybenzoesäure und 16 Teilen Paraformaldehyd bei 90 °C unter Stickstoff befüllt. Das Reaktionsgemisch wird unter Rühren auf 110 °C erhitzt, bis alle Feststoffe gelöst sind, und anschließend werden 44 Teile Methansulfonsäure (70 %-ig - hier und in allen Folgesynthesen als wässrige Lösung) innerhalb von 20 min so zugegeben, dass die Reaktionstemperatur 115 °C nicht übersteigt. Nach Dosierende wird die Reaktionsmischung für weitere 3 h bei 110 °C gerührt. Danach lässt man abkühlen, versetzt mit 350 Teilen Wasser, erhitzt für 30 min auf 100 °C und neutralisiert mit 50 %-iger Natronlauge auf einen pH-Wert von ca. 7,0.

### Beispiel 2

Ein beheizbarer, mit Rührer und Dosierpumpe ausgestatteter Reaktor wird mit 300 Teilen Poly(ethylenoxid)monophenylether (mittleres Molekulargewicht 2000 g/mol), 46 Teilen Vanillin (> 99 %, 4-Hydroxy-3-methoxybenzaldehyd) und 14,9 Teilen Paraformaldehyd bei 90 °C unter Stickstoff befüllt. Das Reaktionsgemisch wird unter Rühren auf 110 °C erhitzt, und anschließend werden 51,4 Teile Methansulfonsäure (70 %) innerhalb von 20 min so zugegeben, dass die Reaktionstemperatur 115°C nicht übersteigt. Nach Dosierende wird die Reaktionsmischung für weitere 2,5 h bei 110 °C gerührt. Danach lässt man abkühlen, versetzt mit 350 Teilen Wasser, erhitzt für 30 min auf 100 °C und neutralisiert mit 50 %-iger Natronlauge auf einen pH-Wert von ca. 7,0.

Beispiel 3Ein beheizbarer, mit Rührer und Dosierpumpe ausgestatteter Reaktor wird mit 400 Teilen Poly(ethylenoxid)monophenylether (mittleres Molekulargewicht 5000 g/mol), 24,6 Teilen 3,4-Dihydroxybenzoesäure und 8 Teilen Paraformaldehyd bei 90 °C unter Stickstoff befüllt. Das Reaktionsgemisch wird unter Rühren auf 115 °C erhitzt, und anschließend werden 38,4 Teile Methansulfonsäure (70 %) innerhalb von 10 min so zugegeben, dass die Reaktionstemperatur 115 °C nicht übersteigt. Nach Dosierende wird die Reaktionsmischung für weitere 3 h bei 110 °C gerührt. Danach lässt man abkühlen, versetzt mit 400 Teilen Wasser, erhitzt für 30 min auf 100 °C und neutralisiert mit 50 %-iger Natronlauge auf einen pH-Wert von ca. 7,0.

### Beispiel 4

Ein beheizbarer, mit Rührer und Dosierpumpe ausgestatteter Reaktor wird mit 260 Teilen Poly(ethylenoxid)monophenylether (mittleres Molekulargewicht 2000 g/mol), 43 Teilen Brenzcatechin (1,2-Dihydroxybenzen), 80 Teilen Wasser und 15,6 Teilen Paraformaldehyd bei 80 °C unter Stickstoff befüllt. Dem Reaktionsgemisch werden anschließend 12,5 Teile Methansulfonsäure (50 %) innerhalb von 20 min so zugegeben, dass die Reaktionstemperatur 80 °C nicht übersteigt. Nach Dosierende wird die Reaktionsmischung für weitere 2 h bei 80 °C gerührt. Danach lässt man abkühlen, versetzt mit 350 Teilen Wasser und neutralisiert mit 50 %-iger Natronlauge auf einen pH-Wert von ca. 7,0.

### Beispiel 5

Ein beheizbarer, mit Rührer und Dosierpumpe ausgestatteter Reaktor wird mit 300 Teilen Poly(ethylenoxid)monophenylether (mittleres Molekulargewicht 2000 g/mol), 46,2 Teilen 3,4-Dihydroxybenzoesäure, 33 Teilen 2-Phenoxyethylphosphat und 19,9 Teilen Paraformaldehyd bei 90 °C unter Stickstoff befüllt. Das Reaktionsgemisch wird unter Rühren auf 110 °C erhitzt, und anschließend werden 41 Teile Methansulfonsäure (70 %) innerhalb von 25 min so zugegeben, dass die Reaktionstemperatur 115 °C nicht übersteigt. Nach Dosierende wird die Reaktionsmischung für weitere 2,5 h bei 110 °C gerührt. Danach lässt man abkühlen, versetzt mit 350 Teilen Wasser, erhitzt für 30 min auf 100 °C und neutralisiert mit 50 %-iger Natronlauge auf einen pH-Wert von ca. 7,0.

Allgemein erfolgt die Synthese des besagten 2-Phenoxyethylphosphats, indem ein beheizbarer, mit Rührer und Dosierpumpe ausgestatteter Reaktor mit 621,8 Teilen 2-Phenoxyethanol bei 20 °C unter Stickstoff befüllt wird. Anschließend werden unter Kühlung 449,7 Teile Polyphosphorsäure über 100 min so zugegeben, dass die Temperatur nicht über 35°C steigt. Nach Dosierende wird die Reaktionsmischung für weitere 15 min bei ca. 70 °C gerührt und vor dem Erstarren abgefüllt.

### Beispiel 6

Ein beheizbarer, mit Rührer und Dosierpumpe ausgestatteter Reaktor wird mit 300 Teilen Poly(ethylenoxid)monophenylether (mittleres Molekulargewicht 2000 g/mol), 45,7 Teilen Vanillin (> 99%, 4-Hydroxy-3-methoxybenzaldehyd), 32,7 Teilen 2-Phenoxyethylphosphat und 19,9 Teilen Paraformaldehyd bei 90 °C unter Stickstoff befüllt. Das Reaktionsgemisch wird unter Rühren auf 110 °C erhitzt, und anschließend werden 41,1 Teile Methansulfonsäure (70 %) innerhalb von 20 min so zugegeben, dass die Reaktionstemperatur 115 °C nicht übersteigt. Nach Dosierende wird die Reaktionsmischung für weitere 2,5 h bei 110 °C gerührt. Danach lässt man abkühlen, versetzt mit 350 Teilen Wasser, erhitzt für 30 min auf 100 °C und neutralisiert mit 50 %-iger Natronlauge auf einen pH-Wert von ca. 7,0.

### Beispiel 7

Ein beheizbarer, mit Rührer und Dosierpumpe ausgestatteter Reaktor wird mit 300 Teilen Poly(ethylenoxid)monophenylether (mittleres Molekulargewicht 2000 g/mol), 45,6 Teilen Isovanillin (3-Hydroxy-4-methoxybenzaldehyd), 33 Teilen 2-Phenoxyethylphosphat und 19,9 Teilen Paraformaldehyd bei 90 °C unter Stickstoff befüllt. Das Reaktionsgemisch wird unter Rühren auf ca. 110 °C erhitzt, und anschließend werden 41 Teile Methansulfonsäure (70 %) innerhalb von 20 min so zugegeben, dass die Reaktionstemperatur 115 °C nicht übersteigt. Nach Dosierende wird die Reaktionsmischung für weitere 2 h bei 110 °C gerührt. Danach lässt man abkühlen, versetzt mit 350 Teilen Wasser, erhitzt für 30 min auf 100 °C und neutralisiert mit 50 %-iger Natronlauge auf einen pH-Wert von ca. 7,0.

### Beispiel 8

Ein beheizbarer, mit Rührer und Dosierpumpe ausgestatteter Reaktor wird mit 300 Teilen Poly(ethylenoxid)monophenylether (mittleres Molekulargewicht 2000 g/mol), 72,1 Teilen 2,3-Dihydroxynaphthalin und 18,0 Teilen Paraformaldehyd bei 80 °C unter Stickstoff befüllt. Dem Reaktionsgemisch werden anschließend 12,5 Teile Methansulfonsäure (50 %) innerhalb von 30 min so zugegeben, dass die Reaktionstemperatur 80 °C nicht übersteigt. Nach Dosierende wird die Reaktionsmischung für weitere 75 min bei 80 °C gerührt. Danach lässt man abkühlen, versetzt mit 350 Teilen Wasser und neutralisiert mit 50 %-iger Natronlauge auf einen pH-Wert von ca. 7,0.

### Beispiel 9

Ein beheizbarer, mit Rührer und Dosierpumpe ausgestatteter Reaktor wird mit 225 Teilen Poly(ethylenoxid)monophenylether (mittleres Molekulargewicht 750 g/mol) und 41,5 Teilen 2-Phenoxyethanol befüllt. Anschließend werden unter Kühlung 66,0 Teile Polyphosphorsäure über 30 min zugegeben und 60 min bei 90 - 95 °C gerührt. Zu dieser Reaktionsmischung werden 92,5 Teile 3,4-Dihydroxybenzoesäure und 39,8 Teile Paraformaldehyd bei 90 °C unter Stickstoffstrom gegeben. Das Reaktionsgemisch wird unter Rühren auf ca. 100 °C erhitzt, und anschließend werden 57,6 Teile Methansulfonsäure (70 %) innerhalb von 25 min so zugegeben, dass die Reaktionstemperatur 105 °C nicht übersteigt. Nach Dosierende wird die Reaktionsmischung für weitere 15 min bei 100 °C gerührt. Danach lässt man abkühlen, versetzt mit 350 Teilen Wasser und neutralisiert mit 50 %-iger Natronlauge auf einen pH-Wert von ca. 7,0.

### Beispiel 10

Ein beheizbarer, mit Rührer und Dosierpumpe ausgestatteter Reaktor wird mit 225 Teilen Poly(ethylenoxid)monophenylether (mittleres Molekulargewicht 750 g/mol) und 82,9 Teilen 2-Phenoxyethanol befüllt. Anschließend werden unter Kühlung 99,0 Teile Polyphosphorsäure über 20 min zugegeben und 40 min bei 90 - 95 °C gerührt. Zu dieser Reaktionsmischung werden 46,2 Teile 3,4-Dihydroxybenzoesäure und 39,8 Teile Paraformaldehyd bei 90 °C unter Stickstoffstrom gegeben. Das Reaktionsgemisch wird unter Rühren auf ca. 100 °C erhitzt und anschließend werden 57,6 Teile Methansulfonsäure (70 %) innerhalb von 25 min so zugegeben, dass die Reaktionstemperatur 105 °C nicht übersteigt. Nach Dosierende wird die Reaktionsmischung für weitere 15 min bei 100 °C gerührt. Danach lässt man abkühlen, versetzt mit 350 Teilen Wasser und neutralisiert mit Polyethylenimin (Lupasol® G100, BASF SE) auf einen pH-Wert von ca. 7,0.

### Beispiel 11

Es wurden Alumosilikatmörtel nach folgender Rezeptur hergestellt:

| | |
|---|---|
| Microsilica | 150 g |
| Flugasche, Typ F | 150 g |
| Quarzsand | 700 g |
| KOH (0,2 %) | 250 g |

Die Ausgangsstoffe wurden im Labor mit einem Mörtelmischer nach DIN EN 196-1 gemischt. Der Mischvorgang wurde wie in DIN EN 196-1 beschrieben durchgeführt, mit dem Unterschied, dass der Quarzsand gleich zu Beginn und nicht erst nachträglich in den Mischtrog gegeben wurde. Als alkalischer Aktivator diente eine 0,2 Gew.-%-ige wässrige KOH-Lösung. Alle polymeren Dispergiermittel wurden mit dem Entschäumer "Defoamer DF93" der BASF SE oder Triisobutylphosphat entschäumt.

Das Dispergiermittel wurde wie in den obigen Beispielen erhalten als wässrige Lösung eingesetzt. Die Dosierung betrug jeweils 3 g (berechnet als Feststoff) . Zum Vergleich wurde das Ausbreitmaß ohne Additiv und mit jeweils 3 g der Polycarboxylatether Melflux® 2453 (Vergleichsbeispiel 1), Glenium 51 (Vergleichsbeispiel 2) sowie Melflux PCE 26L (Vergleichsbeispiel 3), alle erhältlich von der BASF SE, bestimmt.

Das Hüttensandmehl und die Flugasche Typ F hatten folgende Zusammensetzung [Gew.-%]:

| | SiO₂ | Fe₂O₃ | TiO₂ | Al₂O₃ | CaO | MgO | K₂O | Rest |
|---|---|---|---|---|---|---|---|---|
| Hüttensand | 34,0 | 0,4 | 1,1 | 11,6 | 43,0 | 7,3 | 0,5 | 2,1 |
| Flugasche | 53,4 | 5,7 | 1,1 | 26,8 | 3,1 | 2,0 | 4,5 | 3,4 |

Das Ausbreitmaß wurde jeweils durch 15-maliges Klopfen auf einem Ausbreitmaßtisch mit Hägermann-Konus bestimmt (DIN EN 1015-3). Die Ergebnisse sind in der Tabelle 1 wiedergegeben.

**Tabelle 1**

| Beispiel | Ausbreitmaß [cm] | Dichte [g/cm³] |
|---|---|---|
| Ohne Additiv | 19,9 | 1,94 |
| Vergleichsbeispiel 1 | 18,4 | 1,83 |
| Vergleichsbeispiel 2 | 18,9 | 1,95 |
| Beispiel 5 | 24,3 | 1,83 |
| Beispiel 6 | > 30,0 | 1,85 |
| Beispiel 7 | > 30,0 | 1,79 |

### Beispiel 12

Beispiel 11 wurde wiederholt, mit der Abwandlung, dass 5,0 Gew.-%-ige wässrige KOH-Lösung als Aktivator verwendet wurde. Die Ergebnisse sind in der Tabelle 2 wiedergegeben.

**Rezeptur:**

| | |
|---|---|
| Microsilica | 150 g |
| Flugasche, Typ F | 150 g |
| Quarzsand | 700 g |
| KOH (5,0 %) | 262,63 g |

**Tabelle 2**

| Beispiel | Ausbreitmaß [cm] | Dichte [g/cm3] |
|---|---|---|
| Ohne Additiv | 17,5 | 1,96 |
| Vergleichsbeispiel 1 | 19,1 | 1,83 |
| Vergleichsbeispiel 2 | 19,0 | 1,98 |
| Beispiel 1 | 28,4 | 1,96 |
| Beispiel 3 | 23,0 | 1,91 |
| Beispiel 5 | > 30,0 | 1,93 |

### Beispiel 13

Beispiel 11 wurde wiederholt, mit der Abwandlung, in der Rezeptur Hüttensandmehl verwendet wurde. Die Ergebnisse sind in der Tabelle 3 wiedergegeben.

**Rezeptur:**

| | |
|---|---|
| Hüttensandmehl | 300 g |
| Quarzsand | 700 g |
| KOH (0,2 %) | 250 g |

**Tabelle 3**

| Beispiel | Ausbreitmaß [cm] | Dichte [g/cm3] |
|---|---|---|
| Ohne Additiv | 17,1 | 2,11 |
| Vergleichsbeispiel 1 | 22,7 | 2,00 |
| Beispiel 3 | 25,4 | 2,02 |
| Beispiel 5 | 25,8 | 2,03 |
| Beispiel 6 | > 30,0 | 2,05 |
| Beispiel 7 | > 30,0 | 2,13 |
| Beispiel 8 | 28,2 | 2,06 |

### Beispiel 14

Beispiel 13 wurde wiederholt, mit der Abwandlung, dass 5,0 Gew.-%-ige wässrige KOH-Lösung als Aktivator verwendet wurde. Die Ergebnisse sind in der Tabelle 4 wiedergegeben.

**Rezeptur:**

| | |
|---|---|
| Hüttensandmehl | 300 g |
| Quarzsand | 700 g |
| KOH (5,0 %) | 189,09 g |

**Tabelle 4**

| Beispiel | Ausbreitmaß [cm] | Dichte [g/cm3] |
|---|---|---|
| Ohne Additiv | 17,4 | 2,12 |
| Vergleichsbeispiel 1 | 17,9 | 1,86 |
| Vergleichsbeispiel 2 | 21,5 | 2,11 |
| Beispiel 1 | 28,4 | 2,09 |
| Beispiel 3 | 28,1 | 2,05 |
| Beispiel 5 | > 30,0 | 2,10 |
| Beispiel 6 | > 30,0 | 2,07 |
| Beispiel 7 | > 30,0 | 2,08 |

### Beispiel 15

Beispiel 14 wurde wiederholt, mit der Abwandlung, dass eine 3,3 Gew.-%-ige wässrige Na₂CO₃-Lösung als Aktivator verwendet wurde. Die Ausbreitmaße [in cm] wurden nach 6 min und 30 min ermittelt. Die Ergebnisse sind in der Tabelle 5 wiedergegeben.

**Rezeptur:**

| | |
|---|---|
| Hüttensandmehl | 300 g |
| Quarzsand | 700 g |
| Na₂CO₃ (3,3 %) | 181 g |

**Tabelle 5**

| Beispiel | Ausbreitmaß (6 min) | Ausbreitmaß (30 min) | Dichte [g/cm3] |
|---|---|---|---|
| Ohne Additiv | 17,5 | 16,6 | 2,00 |
| Vergleichsbeispiel 3 | 17,8 | 17,0 | 2,03 |
| Beispiel 9 | 20,4 | 19,9 | 2,01 |
| Beispiel 10 | 19,7 | 18,8 | 1,99 |

### Beispiel 16

Beispiel 15 wurde wiederholt, mit der Abwandlung, dass eine 3,3 Gew.-%-ige wässrige Na₂SiO₃-Lösung als Aktivator verwendet wurde. Die Ausbreitmaße [in cm] wurden nach 6 min und 30 min ermittelt. Die Ergebnisse sind in der Tabelle 6 wiedergegeben.

**Rezeptur:**

| | |
|---|---|
| Hüttensandmehl | 300 g |
| Quarzsand | 700 g |
| Na₂SiO₃ (3,3 %) | 181 g |

**Tabelle 6**

| Beispiel | Ausbreitmaß (6 min) | Ausbreitmaß (30 min) | Dichte [g/cm3] |
|---|---|---|---|
| Ohne Additiv | 17,6 | 16,1 | 1,99 |
| Vergleichsbeispiel 3 | 18,3 | 16,2 | 2,00 |
| Beispiel 9 | 20,0 | 19,0 | 1,97 |
| Beispiel 10 | 19,6 | 18,7 | 1,96 |

Wie aus diesen Anwendungstests deutlich wird, ermöglichen die erfindungsgemäßen Polymere eine deutliche Verbesserung der Konsistenz der Alumosilikat-Mörtel im Vergleich zur Probe ohne Dispergiermittel. Teilweise überschreitet das Fließmaß der Mörtelmischungen durch den Zusatz der erfindungsgemäßen Polymere die Ausmaße der Platte des Klopftisches von 30 cm. Eine Verflüssigungsleistung ist dabei in unterschiedlichen Bindemittelzusammensetzungen und mit verschiedenen Aktivatoren wie KOH, Na₂CO₃ oder Wasserglas erreichbar. Weiterhin ist ersichtlich, dass im Gegensatz zu den Polycarboxylatethern mit den erfindungsgemäßen Polymeren eine Verflüssigung von alkaliaktivierten Alumosilkat-Bindemitteln möglich ist.

### Beispiel 17

Ein beheizbarer, mit Rührer und Dosierpumpe ausgestatteter Reaktor wird mit 320 Teilen Poly(ethylenoxid)monophenylether (mittleres Molekulargewicht 2000 g/mol), 44,2 Teilen Salicylsäure und 15,9 Teilen Paraformaldehyd bei 90 °C unter Stickstoff befüllt. Das Reaktionsgemisch wird unter Rühren auf 110 °C erhitzt, bis alle Feststoffe gelöst sind, und anschließend werden 66 Teile Methansulfonsäure (70 %) innerhalb von 15 min so zugegeben, dass die Reaktionstemperatur 110 °C nicht übersteigt. Nach Dosierende wird die Reaktionsmischung für weitere 4 h bei 110 °C gerührt. Danach lässt man abkühlen, versetzt mit 350 Teilen Wasser, erhitzt für 30 min auf 100 °C und neutralisiert mit 50 %-iger Natronlauge auf einen pH-Wert von ca. 7,0.

### Beispiel 18

Ein beheizbarer, mit Rührer und Dosierpumpe ausgestatteter Reaktor wird mit 320 Teilen Poly(ethylenoxid)monophenylether (mittleres Molekulargewicht 2000 g/mol), 44,2 Teilen Salicylsäure, 35 Teilen 2-Phenoxyethylphosphat und 21,2 Teilen Paraformaldehyd bei 90 °C unter Stickstoff befüllt. Das Reaktionsgemisch wird unter Rühren auf 110 °C erhitzt, und anschließend werden 44 Teile Methansulfonsäure (70 %) innerhalb von 15 min so zugegeben, dass die Reaktionstemperatur 115 °C nicht übersteigt. Nach Dosierende wird die Reaktionsmischung für weitere 2,75 h bei 110 °C gerührt. Danach lässt man abkühlen, versetzt mit 350 Teilen Wasser, erhitzt für 30 min auf 100 °C und neutralisiert mit 50 %-iger Natronlauge einen pH-Wert von ca. 7,0.

### Beispiel 19

Ein beheizbarer, mit Rührer und Dosierpumpe ausgestatteter Reaktor wird mit 225 Teilen Poly(ethylenoxid)monophenylether (mittleres Molekulargewicht 750 g/mol), 82,9 Teilen Salicylsäure, 65,4 Teilen 2-Phenoxyethylphosphat, 25 Teilen Wasser und 39,8 Teilen Paraformaldehyd bei 90 °C unter Stickstoff befüllt. Das Reaktionsgemisch wird unter Rühren auf 100 °C erhitzt, und anschließend werden 115,2 Teile Methansulfonsäure (50 %) innerhalb von 40 min so zugegeben, dass die Reaktionstemperatur 105 °C nicht übersteigt. Nach Dosierende wird die Reaktionsmischung für weitere 4 h bei 105 °C gerührt. Danach lässt man abkühlen, versetzt mit 400 Teilen Wasser und neutralisiert mit 50 %-iger Natronlauge einen pH-Wert von ca. 7,0.

### Beispiel 20

Ein beheizbarer, mit Rührer und Dosierpumpe ausgestatteter Reaktor wird mit 225 Teilen Poly(ethylenoxid)monophenylether (mittleres Molekulargewicht 750 g/mol), 165,7 Teilen Salicylsäure und 48,4 Teilen Paraformaldehyd bei 90 °C unter Stickstoff befüllt. Das Reaktionsgemisch wird unter Rühren auf 95 °C erhitzt, und anschließend werden 57,6 Teile Methansulfonsäure (50 %) innerhalb von 25 min so zugegeben, dass die Reaktionstemperatur 115 °C nicht übersteigt. Nach Dosierende wird die Reaktionsmischung für weitere 90 min bei 105 °C gerührt. Danach lässt man abkühlen, versetzt mit 300 Teilen Wasser und neutralisiert mit 50 %-iger Natronlauge einen pH-Wert von ca. 7,0.

### Beispiel 21

Ein beheizbarer, mit Rührer und Dosierpumpe ausgestatteter Reaktor wird mit 225 Teilen Poly(ethylenoxid)monophenylether (mittleres Molekulargewicht 750 g/mol), 82,9 Teilen Salicylsäure, 65,4 Teilen 2-Phenoxyethylphosphat und 127,6 Teilen Formalin (30 %-ig in H₂O) bei 90 °C unter Stickstoff befüllt. Das Reaktionsgemisch wird unter Rühren auf 100 °C erhitzt, und anschließend werden 85,2 Teile Schwefelsäure (70 %) innerhalb von 20 min so zugegeben, dass die Reaktionstemperatur 105 °C nicht übersteigt. Nach Dosierende wird die Reaktionsmischung für weitere 3 h bei 105 °C gerührt. Danach lässt man abkühlen, versetzt mit 300 Teilen Wasser, erhitzt für 30 min auf 100 °C und neutralisiert mit 50 %-iger Natronlauge einen pH-Wert von ca. 7,0.

### Beispiel 22

Ein beheizbarer, mit Rührer und Dosierpumpe ausgestatteter Reaktor wird mit 320 Teilen Poly(ethylenoxid)monophenylether (mittleres Molekulargewicht 2000 g/mol), 44,2 Teilen Salicylsäure, 22,1 Teilen 2-Phenoxyethanol und 21,2 Teilen Paraformaldehyd bei 90 °C unter Stickstoff befüllt. Dem Reaktionsgemisch werden anschließend 43,9 Teile Methansulfonsäure (70 %) innerhalb von 15 min so zugegeben, dass die Reaktionstemperatur 110 °C nicht übersteigt. Nach Dosierende wird die Reaktionsmischung für weitere 1 h bei 110 °C gerührt. Danach lässt man abkühlen, versetzt mit 350 Teilen Wasser, erhitzt für 30 min auf 100 °C und neutralisiert mit 50 %-iger Natronlauge auf einen pH-Wert von ca. 7,0.

### Beispiel 23

Ein beheizbarer, mit Rührer und Dosierpumpe ausgestatteter Reaktor wird mit 225 Teilen Poly(ethylenoxid)monophenylether (mittleres Molekulargewicht 750 g/mol), 82,9 Teilen Salicylsäure, 65,4 Teilen 2-Phenoxyethylphosphat und 82,3 Teile Methansulfonsäure (70%) bei 95 °C unter Stickstoff befüllt. Das Reaktionsgemisch wird unter Rühren auf ca. 105 °C erhitzt, und anschließend werden 128,2 Teile Formalin (30 %-ig) innerhalb von 70 min so zugegeben, dass die Reaktionstemperatur 110 °C nicht übersteigt. Nach Dosierende wird die Reaktionsmischung für weitere 4,75 h bei 100°C gerührt. Danach lässt man abkühlen, versetzt mit 300 Teilen Wasser und neutralisiert mit 50 %-iger Natronlauge einen pH-Wert von ca. 7,0.

### Beispiel 24

Ein beheizbarer, mit Rührer und Dosierpumpe ausgestatteter Reaktor wird mit 263 Teilen Poly(ethylenoxid)monophenylether (mittleres Molekulargewicht 750 g/mol) befüllt und auf 30 °C temperiert. Dann werden innerhalb von 20 min 42 Teile Polyphosphorsäure zugegeben und anschließend für 15 min nachreagiert. Diese Reaktionsmischung wird mit 96,7 Teilen Salicylsäure, 76,4 Teilen 2-Phenoxyethylphosphat, 50 Teilen Wasser und 46,5 Teilen Paraformaldehyd bei 95 °C unter Stickstoff versetzt. Das Reaktionsgemisch wird unter Rühren auf ca. 105 °C erhitzt, und dabei werden 66,2 Teile Methansulfonsäure (70 %) innerhalb von 30 min so zugegeben, dass die Reaktionstemperatur 110 °C nicht übersteigt. Nach Dosierende wird die Reaktionsmischung für weitere 3,25 h bei 105 °C gerührt. Danach lässt man abkühlen, versetzt mit 300 Teilen Wasser und neutralisiert mit 50 %-iger Natronlauge einen pH-Wert von ca. 7,0.

### Beispiel 25

Beispiel 12 wurde mit den Salicylsäure-haltigen Polymeren der Beispiele 19 bis 24 wiederholt. Die Ergebnisse sind in der Tabelle 7 wiedergegeben.

**Rezeptur:**

| | |
|---|---|
| Microsilica | 150 g |
| Flugasche, Typ F | 150 g |
| Quarzsand | 700 g |
| KOH (5,0 %) | 262,63 g |

**Tabelle 7**

| Beispiel | Ausbreitmaß [cm] | Dichte [g/cm3] |
|---|---|---|
| Ohne Additiv | 17,5 | 1,95 |
| Vergleichsbeispiel 1 | 19,1 | 1,83 |
| Vergleichsbeispiel 2 | 19,0 | 1,98 |
| Beispiel 19 | 23,5 | 1,95 |
| Beispiel 21 | ≥ 30,0 | 1,92 |
| Beispiel 23 | ≥ 30,0 | 1,91 |
| Beispiel 24 | 27,3 | 1,94 |

### Beispiel 26

Beispiel 25 wurde wiederholt, mit der Abwandlung, dass 0,2 Gew.-%-ige wässrige KOH-Lösung als Aktivator verwendet wurde. Die Ergebnisse sind in der Tabelle 8 wiedergegeben.

**Rezeptur:**

| | |
|---|---|
| Microsilica | 150 g |
| Flugasche, Typ F | 150 g |
| Quarzsand | 700 g |
| KOH (0,2 %) | 250 g |

**Tabelle 8**

| Beispiel | Ausbreitmaß [cm] | Dichte [g/cm3] |
|---|---|---|
| Ohne Additiv | 19,9 | 1,94 |
| Vergleichsbeispiel 1 | 18,4 | 1,83 |
| Vergleichsbeispiel 2 | 18,9 | 1,95 |
| Beispiel 18 | 23,6 | 1,83 |
| Beispiel 19 | 25,4 | 1,85 |
| Beispiel 23 | 25,8 | 1,85 |
| Beispiel 24 | ≥ 30,0 | 1,97 |

### Beispiel 27

Beispiel 13 wurde mit den Salicylsäure-haltigen Polymeren der Beispiele 17 bis 24 wiederholt. Die Ergebnisse sind in der Tabelle 9 wiedergegeben.

**Rezeptur:**

| | |
|---|---|
| Hüttensandmehl | 300 g |
| Quarzsand | 700 g |
| KOH(0,2%) | 180 g |

**Tabelle 9**

| Beispiel | Ausbreitmaß [cm] | Dichte [g/cm3] |
|---|---|---|
| Ohne Additiv | 17,1 | 2,11 |
| Vergleichsbeispiel 1 | 22,7 | 2,00 |
| Beispiel 17 | 25,4 | 2,05 |
| Beispiel 18 | ≥ 30,0 | 2,11 |
| Beispiel 19 | 29,3 | 2,05 |
| Beispiel 22 | 22,9 | 1,88 |
| Beispiel 23 | 28,5 | 2,01 |
| Beispiel 24 | 24,7 | 2,12 |

### Beispiel 28

Beispiel 27 wurde wiederholt, mit der Abwandlung, dass 5,0 Gew.-%-ige wässrige KOH-Lösung als Aktivator verwendet wurde. Die Ergebnisse sind in der Tabelle 10 wiedergegeben.

**Rezeptur:**

| | |
|---|---|
| Hüttensandmehl | 300 g |
| Quarzsand | 700 g |
| KOH (5,0 %) | 189,09 g |

**Tabelle 10**

| Beispiel | Ausbreitmaß [cm] | Dichte [g/cm3] |
|---|---|---|
| Ohne Additiv | 17,4 | 2,12 |
| Vergleichsbeispiel 1 | 17,9 | 1,86 |
| Vergleichsbeispiel 2 | 21,5 | 2,11 |
| Beispiel 17 | 28,4 | 2,09 |
| Beispiel 18 | ≥ 30,0 | 2,13 |
| Beispiel 19 | ≥ 30,0 | 2,09 |
| Beispiel 21 | ≥ 30,0 | 2,06 |
| Beispiel 22 | ≥ 30,0 | 2,00 |
| Beispiel 23 | ≥ 30,0 | 2,08 |
| Beispiel 24 | 29,3 | 2,07 |

### Beispiel 29

Beispiel 28 wurde wiederholt, mit der Abwandlung, dass 15,0 Gew.-%-ige wässrige KOH-Lösung als Aktivator verwendet wurde. Die Ergebnisse sind in der Tabelle 11 wiedergegeben.

**Rezeptur:**

| | |
|---|---|
| Hüttensandmehl | 300 g |
| Quarzsand | 700 g |
| KOH (15 %) | 211,34 g |

**Tabelle 11**

| Beispiel | Ausbreitmaß [cm] | Dichte [g/cm3] |
|---|---|---|
| Ohne Additiv | 18,6 | 2,07 |
| Vergleichsbeispiel 1 | 19,7 | 1,85 |
| Vergleichsbeispiel 2 | 19,4 | 2,05 |
| Beispiel 19 | 23,7 | 2,11 |
| Beispiel 21 | 27,4 | 2,09 |
| Beispiel 24 | ≥ 30,0 | 2,11 |

Wie diese Beispiele zeigen, ermöglichen die erfindungsgemäßen Polymere eine deutliche Verbesserung der Konsistenz der Alumosilikat-Mörtel. Dabei erlauben die erfindungsgemäßen Polymere eine Verbesserung der Konsistenz von Geopolymersystemen mit unterschiedlicher Bindemittelzusammensetzung wie Flugaschen, Microsilica oder Hüttensandmehle als auch verschiedenen Aktivatorlösungen. Zudem ist aus den Tests ersichtlich, dass Standard-Fließmittel wie Polycarboxylatether kaum Wirkung zeigen, während die erfindungsgemäßen Polymere eine hervorragende Verflüssigung und somit Wasserreduktion ermöglichen.

### Beispiel 30

Ein beheizbarer, mit Rührer und Dosierpumpe ausgestatteter Reaktor wird mit 262,5 Teilen Poly(ethylenoxid)monophenylether (mittleres Molekulargewicht 750 g/mol) und 48,4 Teilen 2-Phenoxyethanol befüllt. Anschließend werden unter Kühlung 77,0 Teile Polyphosphorsäure über 15 min zugegeben und 45 min bei ca. 95 °C gerührt. Zu dieser Reaktionsmischung werden 96,7 Teile Salicylsäure, 50 Teile Wasser und 46,5 Teile Paraformaldehyd bei ca. 90 °C unter Stickstoffstrom gegeben. Das Reaktionsgemisch wird unter Rühren auf ca. 90 °C aufgeheizt und anschließend werden 67,3 Teile Methansulfonsäure (70 %) innerhalb von 30 min so zugegeben, dass die Reaktionstemperatur 110 °C nicht übersteigt. Nach Dosierende wird die Reaktionsmischung für weitere 120 min bei ca. 100 °C gerührt. Danach lässt man abkühlen, versetzt mit 350 Teilen Wasser und neutralisiert mit Natronlauge (50 %) auf einen pH-Wert von ca. 7,0. Das neutralisierte Dispergiermittel liegt als ca. 35,0 Gew.-%-ige wässrige Lösung vor.

### Beispiel 31

Ein beheizbarer, mit Rührer und Dosierpumpe ausgestatteter Reaktor wird mit 225 Teilen Poly(ethylenoxid)monophenylether (mittleres Molekulargewicht 750 g/mol) und 82,9 Teilen 2-Phenoxyethanol befüllt. Anschließend werden unter Kühlung 99,0 Teile Polyphosphorsäure über 35 min zugegeben und 60 min bei ca. 90 - 95 °C gerührt. Zu dieser Reaktionsmischung werden 41,4 Teile Salicylsäure, 40 Teile Wasser und 39,8 Teile Paraformaldehyd unter Stickstoffstrom gegeben. Das Reaktionsgemisch wird unter Rühren auf ca. 85 °C erhitzt und anschließend werden 57,7 Teile Methansulfonsäure (70 %) innerhalb von 35 min so zugegeben, dass die Reaktionstemperatur 105 °C nicht übersteigt. Nach Dosierende wird die Reaktionsmischung für weitere 140 min bei 100 °C gerührt. Danach lässt man abkühlen, versetzt mit 350 Teilen Wasser und neutralisiert mit Polyethylenimin (Lupasol® G100 der BASF SE) auf einen pH-Wert von ca. 7,0. Das neutralisierte Dispergiermittel liegt als ca. 30,4 Gew.-%-ige wässrige Lösung vor.

### Beispiel 32

Es wurden Alumosilikatmörtel nach folgender Rezeptur hergestellt:

| | |
|---|---|
| Microsilica | 150 g |
| Flugasche, Typ F | 150 g |
| Quarzsand | 700 g |
| Na₂Al₂O₄ | 15 g |
| Entschäumer | 0,12 g |
| Wasser gesamt | 250 g |

Die Ausgangsstoffe wurden im Labor mit einem Mörtelmischer nach DIN EN 196-1 gemischt. Der Mischvorgang wurde wie in DIN EN 196-1 beschrieben durchgeführt, mit dem Unterschied, dass der Quarzsand gleich zu Beginn und nicht erst nachträglich in den Mischtrog gegeben wurde. Als alkalischer Aktivator diente das im Anmachwasser gelöste Natriumaluminat. Als Entschäumer wurde das Produkt "Defoamer DF40" der BASF SE eingesetzt. Das Dispergiermittel wurde wie in den Beispielen 1 und 2 erhalten als wässrige Lösung eingesetzt (Angabe erfolgt als Polymerfeststoffgehalt).

Die Flugasche vom Typ F und das Microsilica hatten folgende Zusammensetzung [Gew.-%]:

| | SiO₂ | Fe₂O₃ | TiO₂ | Al₂O₃ | CaO | MgO | K₂O | Rest |
|---|---|---|---|---|---|---|---|---|
| Flugasche | 53,4 | 5,7 | 1,1 | 26,8 | 3,1 | 2,0 | 4,5 | 3,4 |
| Microsilica | 98,1 | 0,0 | 0,0 | 0,0 | 0,23 | 0,2 | 0,77 | 0,7 |

Das Ausbreitmaß nach 6 Minuten wurde jeweils durch 15-maliges Klopfen auf einem Ausbreitmaßtisch mit Hägermann-Konus bestimmt (DIN EN 1015-3). Die Ergebnisse sind in der Tabelle 12 wiedergegeben.

**Tabelle 12**

| | Referenz | Beispiel 30 | Beispiel 31 |
|---|---|---|---|
| Dispergiermittel | 0,0 g | 3,0 g | 3,0 g |
| Ausbreitmaß | 18,6 cm | 27,5 cm | 27,3 cm |

Diese Tabelle zeigt, dass die erfindungsgemäßen Dispergiermittel auch in Kombination mit Natriumaluminat als alkalischer Aktivator eine deutliche Verbesserung der Ausbreitmaße der Alumosilikat-Mörtelmischungen ermöglichen. Dabei wird eine Verbesserung der Konsistenz sowohl durch Na-Salze als auch durch Polyethylenimin-Salze der erfindungsgemäßen Polymere erzielt.

### Beispiel 33

Beispiel 3 wurde wiederholt. Man erhielt ein vollständig wasserlösliches braunes Polymer mit einem Molekulargewicht (max. Peak) Mp = 24,3 kDa (Säulenkombinationen: OH-Pak SB-G, OH-Pak SB 804 HQ und OH-Pak SB 802.5 HQ von Shodex, Japan; Elutionsmittel: 80 Vol.-% wässrige Ammoniumformiat-Lösung (0,05 mol/l) und 20 Vol.-% Acetonitril; Injektionsvolumen 100 µl; Durchflussrate 0,5 ml/min).

### Beispiel 34

Ein beheizbarer, mit Rührer, Rückflusskühler und Dosierpumpe ausgestatteter Reaktor wird mit 150 Teilen Poly(ethylenoxid)monophenylether (mittleres Molekulargewicht 750 g/mol), 101 Teilen Hydrochinon-bis-(2-hydroxyethyl)-ether und 28 Teilen Salicylsäure befüllt und auf 90 °C unter Stickstoff temperiert. Dann werden innerhalb von 33 min 132 Teile Polyphosphorsäure zugegeben und anschließend für 10 min nachreagiert. Diese Reaktionsmischung wird mit 48 Teilen Methansulfonsäure (70 %) und 2 Teilen Wasser bei 98 °C versetzt. Das Reaktionsgemisch wird unter Rühren auf ca. 90 °C abgekühlt, und dabei werden 95 Teile Formalinlösung (30 %) innerhalb von 50 min so zugegeben, dass die Reaktionstemperatur 110 °C nicht übersteigt. Nach Dosierende wird die Reaktionsmischung für weitere 20 Min bei 100 °C gerührt. Danach lässt man abkühlen, versetzt mit 760 Teilen Wasser und neutralisiert mit 50 %-iger Natronlauge bis auf einen pH-Wert von ca. 7,3.

### Beispiel 35

Ein beheizbarer, mit Rührer, Rückflusskühler und Dosierpumpe ausgestatteter Reaktor wird mit 188 Teilen Poly(ethylenoxid)monophenylether (mittleres Molekulargewicht 750 g/mol) und 35 Teilen Phenoxyethanol befüllt und auf 25 °C unter Stickstoff temperiert. Dann werden innerhalb von 8 min 55 Teile Polyphosphorsäure zugegeben, anschließend wird die Reaktionsmischung bis 92 °C erhitzt und 100 min bei dieser Temperatur nachreagiert. Das Reaktionsgemisch wird mit 104 Teilen Salicylsäure und 69 Teilen Methansulfonsäure (70%) versetzt und nach 10 Min werden 131 Teile Formalinlösung (30 %) innerhalb von 60 min so zugegeben, dass die Reaktionstemperatur 110 °C nicht übersteigt. Nach Dosierende wird die Reaktionsmischung für weitere 3,5 h bei 100 °C gerührt. Danach lässt man abkühlen, versetzt mit 500 Teilen Wasser und neutralisiert mit 50 %-iger Natronlauge bis auf einen pH-Wert von ca. 7,3.

### Beispiel 36

Ein beheizbarer, mit Rührer, Rückflusskühler und Dosierpumpe ausgestatteter Reaktor wird mit 188 Teilen Poly(ethylenoxid)monophenylether (mittleres Molekulargewicht 750 g/mol) befüllt, und dazu werden innerhalb von 8 min 28 Teile Polyphosphorsäure unter Stickstoff zugegeben. Nach 10 min ab Dosierende wird die Reaktionsmischung unter Rühren bis 90 °C erhitzt und 4 Stunden bei ca. 95°C nachreagiert. Anschließend werden 35 Teile Phenoxyethanol und noch 30 min später 104 Teile Salicylsäure und 69 Teile Methansulfonsäure (70%) zugegeben. Das Reaktionsgemisch wird unter Rühren auf ca. 100 °C erhitzt und ab Erreichen dieser Temperatur werden 132 Teile Formalinlösung (30 %) innerhalb von 50 min so zugegeben, dass die Reaktionstemperatur 110 °C nicht übersteigt. Nach Dosierende wird die Reaktionsmischung für weitere 3,7 h bei 95 °C gerührt. Danach lässt man abkühlen, versetzt mit 450 Teilen Wasser und neutralisiert mit 50 %-iger Natronlauge bis auf einen pH-Wert von ca. 7,3.

### Beispiel 37

Ein beheizbarer, mit Rührer, Rückflusskühler und Dosierpumpe ausgestatteter Reaktor wird mit 135 Teilen Poly(ethylenoxid)monophenylether (mittleres Molekulargewicht 750 g/mol) befüllt, und dazu werden innerhalb von 6 min 20 Teile Polyphosphorsäure unter Stickstoff zugegeben. Nach 10 min ab Dosierende wird die Reaktionsmischung unter Rühren bis 90 °C erhitzt und 4 Stunden bei ca. 95°C nachreagiert. Anschließend werden 50 Teile Phenoxyethanol und noch 15 min später 149 Teile Salicylsäure und 99 Teile Methansulfonsäure (70%) zugegeben. Das Reaktionsgemisch wird unter Rühren auf ca. 90 °C erhitzt und ab Erreichen dieser Temperatur werden 170 Teile Formalinlösung (30 %) innerhalb von 60 min so zugegeben, dass die Reaktionstemperatur 110 °C nicht übersteigt. Nach Dosierende wird die Reaktionsmischung für weitere 2,75 h bei 95 °C gerührt. Danach lässt man abkühlen, versetzt mit 500 Teilen Wasser und neutralisiert mit 50 %-iger Natronlauge bis auf einen pH-Wert von ca. 7,3.

### Beispiel 38

Es wurden Alumosilikatmörtel nach folgender Rezeptur hergestellt:

| | |
|---|---|
| Hüttensandmehl | 300 g |
| Quarzsand | 700 g |
| KOH | 12 g |
| Na₂CO₃ | 12 g |
| Entschäumer | 0,12 g |
| Wasser gesamt | 175 g |

Die Ausgangsstoffe wurden im Labor mit einem Mörtelmischer nach DIN EN 196-1 gemischt. Der Mischvorgang wurde wie in DIN EN 196-1 beschrieben durchgeführt, mit dem Unterschied, dass der Quarzsand gleich zu Beginn und nicht erst nachträglich in den Mischtrog gegeben wurde. Als alkalischer Aktivator dienten das im Anmachwasser gelöste Kaliumhydroxyd und Natriumkarbonat. Als Entschäumer wurde das Produkt "Defoamer DF93" der BASF SE eingesetzt. Das Dispergiermittel wurde, wie in den Beispielen 1 und 2 erhalten, als wässrige Lösung eingesetzt (Polymerfeststoffgehalt in der Mörtelmischung: 3 g).

Das Hüttensandmehl hatte folgende Zusammensetzung [Gew.-%]:

| | SiO₂ | Fe₂O₃ | TiO₂ | Al₂O₃ | CaO | MgO | K₂O | Rest |
|---|---|---|---|---|---|---|---|---|
| Hüttensand | 33,1 | 0,6 | 0,6 | 15,0 | 41,3 | 6,1 | 0,3 | 3,0 |

Das Ausbreitmaße nach 6 Minuten und nach 30 Minuten wurden jeweils durch 15-maliges Klopfen auf einem Ausbreitmaßtisch mit Hägermann-Konus bestimmt (DIN EN 1015-3). Die Ergebnisse sind in der Tabelle 13 wiedergegeben.

**Tabelle 13**

| Beispiel | Ausbreitmaß nach 6 min [cm] | Ausbreitmaß nach 30 min [cm] | Dichte [g/cm³] |
|---|---|---|---|
| Ohne Additive | 15,7 | 15,2 | 1,98 |
| Vergleichsbeispiel (Melflux 2424) | 16,6 | 15,5 | 1,96 |
| Beispiel 34 | 16,6 | 16,3 | 2,05 |
| Beispiel 35 | 20,8 | 20,6 | 2,02 |
| Beispiel 36 | 23,7 | 23,3 | 2,08 |
| Beispiel 37 | 24,6 | 24,0 | 2,08 |

### Beispiel 39

In einem Metallgefäß wurden 100,0 g eines Hüttensandkompositzementes vom Typ CEM III/A 32,5 N eingewogen. Die unten angegebene Menge an Dispergiermittel, berechnet als Feststoffgehalt, wurden unter Einrechnung des im Dispergiermittel enthaltenen Wassers mit der Menge Wasser vermischt, die einem Wasser/Zementwert von 0,3 entsprach. In diesem Zusammenhang soll der Ausdruck "bwoc" "Gew.-%, bezogen auf die Zementmenge" bedeuten. Nach Zugabe des Wasser/Dispergiermittelgemisches zum Zement wurde die Mischung 1 min per Flügelrührer intensiv gerührt. Der so erhaltene Zementleim wurde in einen Metallkonus (Innendurchmesser oben/unten 2,0/4,0 cm, Höhe 6,0 cm), der sich auf einer horizontal angeordneten Glasplatte befand, eingefüllt. Der Metallkonus wurde abgehoben, wobei sich der Zementleim ausbreitete. Anschließend wurde das Ausbreitmaß ("ABM", Durchmesser des Zementleimfladens) an 3 Stellen bestimmt und der Mittelwert herangezogen. Die gemittelten Werde sind in der Tabelle 14 wiedergegeben. (Glenium® SKY 115 ist ein kommerzielles Hochleistungsdispergiermittel der BASF Construction Polymers GmbH auf Polycarboxylatetherbasis.)

**Tabelle 14**

| | Dispergiermittel | Dosierung [g] | Dosierung [bwoc] | ABM [cm] |
|---|---|---|---|---|
| Vergleich 1 | Glenium® SKY 115 | 0,67 | 0,67% | 10,8 |
| Vergleich 2 | Glenium® SKY 115 | 0,34 | 0,34% | < 8 |
| Beispiel 39 | Glenium® SKY 115 | 0,34 | 0,87% | 10,6 |
| | Polykondensationsprodukt | 0,53 | | |

Es zeigte sich, dass das Referenzausbreitmaß des Zementleims aus Vergleich 1 bei einer Halbierung der zugesetzten Menge an Hochleistungsdispergiermittel (Vergleich 2) erwartungsgemäß nicht erreicht werden konnte. Erst durch Zugabe des erfindungsgemäßen Polykondensationsprodukts (Beispiel 33) konnte das Ausbreitmaß wieder nahezu auf Referenzniveau angehoben werden.

Eine definierte Menge des so erhaltenen Zementleims wurde jeweils in ein Kalorimeter überführt und die Entwicklung der Hydratationswärme kalorimetrisch aufgezeichnet. Hierzu wurde das Kalorimeter zuvor (Isothermales Referenzkalorimeter der Fa. TA Instruments, Modell TAM-AIR) auf 20,0°C equilibriert. Nach 48 Stunden wurde die Messung gestoppt und die Daten ausgewertet. Hierzu wurde die differentielle Wärmeentwicklung dH/dt (mW/g, normiert auf 1g Zementleim) und ebenso die integrale Wärmeentwicklung H (J/g; nach 6, 12, 24 und 48 Stunden) herangezogen. Die Ergebnisse sind in der Tabelle 15 wiedergegeben.

**Tabelle 15**

| | dH/dt max. [mW/g] bei t [h, min] | H [J/g] | | | |
|---|---|---|---|---|---|
| | | 6 h | 12 h | 24 h | 48 h |
| Vergleich 1 | 1,58 / 23 h, 54 min | 5,52 | 10,96 | 47,60 | 146,11 |
| Beispiel 39 | 1,66 / 18 h, 54 min | 5,76 | 13,48 | 71,59 | 157.00 |

Es zeigte sich, dass durch die Verwendung des Polykondensationsprodukts aus Beispiel 33 eine deutlich schnellere Hydratation erreicht werden konnte. Trotz einer insgesamt höheren Polymerdosierung wurde eine deutlich schnellere Wärmefreisetzung beobachtet, was auf eine schnellere Hydratation des Zementes schließen lässt. Das Maximum der Wärmeentwicklung des Zementleims, der unter Verwendung des erfindungsgemäßen Polykondensationsprodukts formuliert wurde, wurde bereits bei 18h und 54 Minuten erreicht, während der Zementleim, der unter Verwendung des kommerziellen Hochleistungsbetonverflüssigers formuliert wurde, erst 5 Stunden später die maximale Wärmeentwicklung erreichte. Dies spiegelt sich auch in der integralen Wärmeentwicklung wider; nach jeweils 6, 12, 24 und 48 Stunden konnten stets höhere Wärmeentwicklungen beobachtet werden.

### Beispiel 40

In einem Metallgefäß wurden 100,0 g eines Hüttensand/Flugaschekompositzementes Typ CEM V/A 32,5 N eingewogen. Die unten angegebene Menge an Dispergiermittel, berechnet als Feststoffgehalt, wurden unter Einrechnung des im Dispergiermittel enthaltenen Wassers mit der Menge Wasser vermischt, die einem Wasser/Zementwert von 0,33 entsprach. Nach Zugabe des Wasser/Dispergiermittelgemisches zum Zement wurde die Mischung 1 min per Flügelrührer intensiv gerührt. Der so erhaltene Zementleim wurde in einen Metallkonus (Innendurchmesser oben/unten 2,0/4,0 cm, Höhe 6,0 cm), der sich auf einer horizontal angeordneten Glasplatte befand, eingefüllt. Der Metallkonus wurde abgehoben, wobei sich der Zementleim ausbreitete. Anschließend wurde das Ausbreitmaß an 3 Stellen bestimmt und der Mittelwert herangezogen. Die gemittelten Werde sind in der Tabelle 16 wiedergegeben.

**Tabelle 16**

| | Dispergiermittel | Dosierung [g] | Dosierung [bwoc] | ABM [cm] |
|---|---|---|---|---|
| Vergleich 3 | Glenium® SKY 115 | 0,67 | 0,67% | 17,0 |
| Beispiel 40 | Glenium® SKY 115 | 0,34 | 0,67% | 15,9 |
| | Polykondensationsprodukt | 0,33 | | |

Es zeigte sich, dass das Referenzausbreitmaß des Zementleims aus Vergleich 3 bei einer Halbierung der zugesetzten Menge an Hochleistungsdispergiermittel und Zugabe des erfindungsgemäßen Polykondensationsprodukts nahe an das Referenzniveau angehoben werden konnte.

### Beispiel 41

Beispiel 3 wurde mit 450 Teilen Poly(ethylenoxid)monophenylether (mittleres Molekulargewicht 5000 g/mol), 27,3 Teilen 3,4-Dihydroxybenzoesäure, 9,3 Teilen Paraformaldehyd und 49,4 Teilen Methansulfonsäure (70 %) wiederholt. Der pH-Wert nach Neutralisation mit 50 %-iger Natronlauge betrug ca. 7,3. Man erhielt ein vollständig wasserlösliches dunkelbraunes Polymer als ca. 32,4 Gew.-%-ige wässrige Lösung. Das Molekulargewicht betrug ca. 12-23 kDa (Mp = 11,6 und 22,5 kDa; GPC-Bedingungen wie in Beispiel 33).

### Beispiel 42

Beispiel 20 wurde mit 262,5 Teilen Poly(ethylenoxid)monophenylether (mittleres Molekulargewicht 750 g/mol), 145.0 Teilen Salicylsäure, 50 Teilen Wasser, 46.5 Teilen Paraformaldehyd und 67.2 Teilen Methansulfonsäure (70 %) wiederholt. Der pH-Wert nach Neutralisation mit 50 %-iger Natronlauge betrug ca. 7,3. Man erhielt ein vollständig wasserlösliches gelbliches Polymer als ca. 28,0 Gew.-%-ige wässrige Lösung. Das mittlere Molekulargewicht betrug ca. 5.4 kDa (GPC-Bedingungen wie in Beispiel 33).

### Beispiel 43

Beispiel 20 wurde mit 300 Teilen Poly(ethylenoxid)monophenylether (mittleres Molekulargewicht 2000 g/mol), 82,9 Teilen Salicylsäure, 26,1 Teilen Paraformaldehyd und 72,1 Teilen Methansulfonsäure (50 %) wiederholt. Die Umsetzung erfolgte bei 105-108 °C. Das Molekulargewicht betrug ca. 16 kDa.

### Beispiel 44

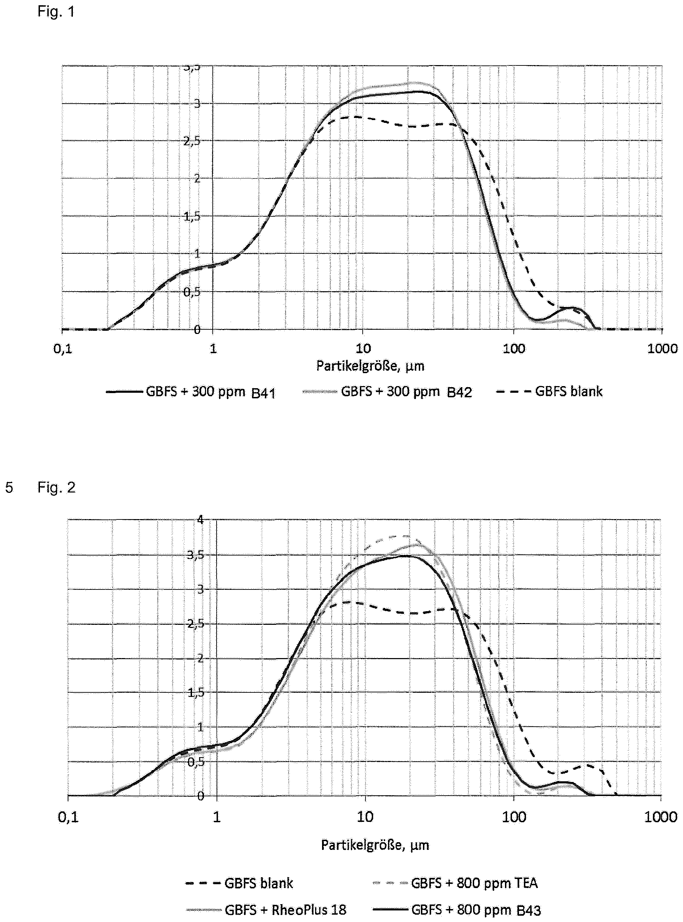

12.3 kg Hüttensandmehl ("GBFS") der Fa. Salzgitter, versetzt mit einer 32,4 %-igen wässrigen Lösung des Polymers aus Beispiel 41 (Bezeichnung "B41" in Fig. 1 und in den Tabellen 17 und 18) bzw. einer 28,0 %-igen wässrigen Lösung des Polymers aus Beispiel 42 (Bezeichnung "B42" in Fig. 1 und in den Tabellen 17 und 18) (jeweils 0,03 Gew.-% Polymer, bezogen auf das Gewicht des Hüttensandmehls), wurden in einer Laborkugelmühle (LABBAS LM0504-S7, CEMTEC GmbH) mit Edelstahlkugeln 125 min lang ohne zusätzliches äußeres Heizen vermahlen. Das resultierende Pulver wurde durch ein 5 mm-Sieb gesiebt. Zum Vergleich wurde eine GBFS-Probe ohne Zusatz von Additiven (Bezeichnung "blank" in Fig. 1) vermahlen und gesiebt. Die Teilchengrößenverteilungen der resultierenden Pulver wurde unter Verwendung eines "Mastersizer 2000"-Instruments der Fa. Malvern Instruments bestimmt und die Blaine-Werte wurden unter Verwendung eines Blaine-Analysators der Fa. SEGER Tonindustrie bestimmt. Die Teilchengrößenverteilungen sind in Fig. 1 wiedergegeben. Jeweils 700 g der erhaltenen Hüttensandmehlproben wurden unter Verwendung eines Zyklons "100 MZR (Plain)" der Fa. Hosokawa Alpine bei einer eingestellten Grenz-Teilchengröße von 15 µm, einer Luftgeschwindigkeit von konstant 49 m/s und einer Rotationsgeschwindigkeit von 6000 Upm in "grobe" und "feine" Fraktionen getrennt. Für jede der aufgetrennten Proben wurde die Teilchengrößenverteilung der groben und feinen Fraktionen gemessen.

### Beispiel 45

Beispiel 44 wurde wiederholt. Es wurden jeweils 0,08 Gew.-% der folgenden Additive, bezogen auf das Gewicht des Hüttensandmehls, verwendet: "TEA" (Triethanolamin), "RheoPlus 18" (44,2 %-ige wässrige Lösung, enthaltend 5 % des Entschäumers Plurafac LF305), Polymer aus Beispiel 41 (Bezeichnung "B41", in Form einer 32,4 %-igen wässrigen Lösung, enthaltend 5 % des Entschäumers Plurafac LF305), Polymer aus Beispiel 42 (Bezeichnung "B42", in Form einer 28,0 %-igen wässrigen Lösung, enthaltend 5 % des Entschäumers Plurafac LF305) und Polymer aus Beispiel 43 (Bezeichnung "B43" in Fig. 2, in Form einer 31,7 %-igen wässrigen Lösung, enthaltend 5 % des Entschäumers Plurafac LF305). Die Vermahlung erfolgte bei 120°C. Auch hier wurde zum Vergleich eine GBFS-Probe ohne Zusatz von Additiven (Bezeichnung "blank" in Fig. 2) vermahlen und gesiebt. Fig. 2 gibt die entsprechenden Teilchengrößenverteilungen wieder.

### Diskussion:

Fig. 1 zeigt, dass der Hauptunterschied bei der Teilchengrößenverteilung im Bereich der groben Teilchen (15-300 µm) liegt, d.h. dass die Zugabe des entsprechenden Mahlhilfsmittels zu einer Verringerung der Menge an groben Teilchen führt, wobei die d (0,5)- und d (0,9)-Werte mit den Mahlhilfsmitteln deutlich verringert und die Blaine-Werte signifikant erhöht sind (vgl. Table 17). Die Zeit für eine vollständige Trennung der Fraktionen ist bei der Verwendung der erfindungsgemäßen Mahlhilfsmittel verkürzt, was sich günstig auf die Energiekosten auswirkt, und die durchschnittliche Teilchengröße der groben Fraktion ist deutlich verringert (vgl. Tabelle 18). Daraus kann abgeleitet werden, dass die erfindungsgemäßen Polykondensationsprodukte die Mahlbarkeit der Schlacke verbessern.

**Tabelle 17**

| Probe | d (0,1) | d (0,5) | d (0,9) | d (0,450) | d (0,632) | n | Blaine | Dichte |
|---|---|---|---|---|---|---|---|---|
| GBFS "B42" | 1,403 | 10,556 | 45,621 | 8,816 | 16,885 | 1,03 | 3937 | 2,891 |
| GBFS "B41" | 1,375 | 10,69 | 49,021 | 8,875 | 17,391 | 0,98 | 3902 | 2,897 |
| GBFS "blank" | 1,419 | 11,528 | 65,982 | 9,38 | 20,158 | 0,97 | 3758 | 2,905 |

**Tabelle 18**

| Probe | grob/fein (m/m) | Trennzeit [min] | d (0,5) der feinen Fraktion [µm] | d (0,5) der groben Fraktion [µm] |
|---|---|---|---|---|
| "B42" | 1.15 | 31 | 5.645 | 29.553 |
| "B41" | 0.76 | 31 | 5.584 | 28.249 |
| "blank" | 0.71 | 38 | 5.413 | 36.618 |

Fig. 2 und Tabelle 19 zeigen Teilchengrößenverteilungen und Blaine-Werte von Hüttensanden, die mit den verschiedenen in Beispiel 40 genannten Additiven heiß vermahlen wurden. Die durchschnittlichen Teilchengrößen d (0,5) der mit den Polymeren "B42" und "B43" vermahlenen Hüttensande sind bedeutend kleiner und die entsprechenden Blaine-Werte höher als die der Probe ohne Additive ("blank") bzw. der mit "TEA" bzw. RheoPlus 18 (Hochleistungszementverflüssiger der BASF SE) vermahlenen Probe.

**Tabelle 19**

| Probe | d (0.5) | d (0.9) | Blaine-Wert |
|---|---|---|---|
| GBFS + "B42" | 10,54 | 43,36 | 3818 |
| GBFS + "B43" | 10,72 | 44,01 | 3877 |
| GBFS + "TEA" | 11,12 | 41,25 | 3735 |
| GBFS + "RheoPlus 18" | 11,72 | 45,17 | 3560 |
| GBFS + "B41" | 11,86 | 48,08 | 3612 |
| GBFS "blank" | 12,23 | 72,43 | 3482 |

## Patentansprüche

1. Polykondensationsprodukt, umfassend als Monomerkomponenten:
A) mindestens einen Arylpolyoxyalkylenether der Formel (I) 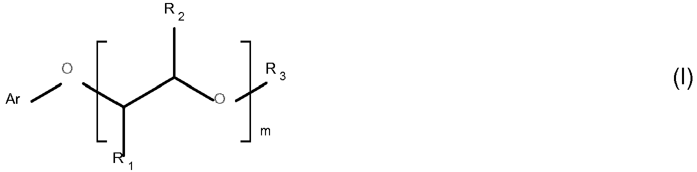 wobei
Ar eine Arylgruppe ist,
R₁ und R₂ jeweils unabhängig voneinander aus H, Methyl und Ethyl ausgewählt sind, wobei vorzugsweise mindestens eine der Gruppen R₁ und R₂ = H ist,
m eine ganze Zahl von 1 bis 300 ist und
R₃ aus der Gruppe, bestehend aus H, Alkyl, Aryl, Aralkyl, Alkaryl, Phosphat, sowie Mischungen davon ausgewählt ist;
B) mindestens eine aromatische Verbindung der Formel (II), 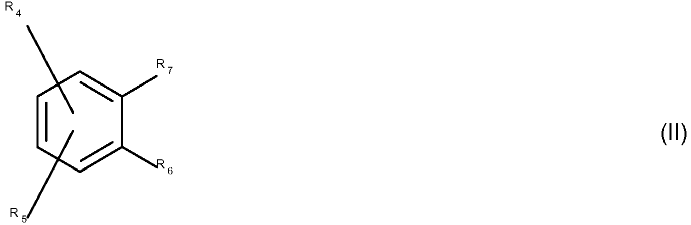 wobei R₄ und R₅ jeweils unabhängig voneinander aus H, R₈, OH, OR₈, C(O)R₈, COOH, COOR₈, SO₃H, SO₃R₈ und NO₂ sowie Alkali-, Erdalkali- und Ammoniumsalzen davon ausgewählt sind, oder zusammen einen weiteren anellierten Ring darstellen, wobei R₈ jeweils unabhängig aus der Gruppe, bestehend aus Alkyl, Aryl, Aralkyl, Alkaryl ausgewählt ist, und R₆ und R₇ jeweils unabhängig voneinander aus OH, OR₉, C(O)R₉, COOH und COOR₉ sowie Alkali- und Erdalkali- und Ammoniumsalzen davon ausgewählt sind, wobei Rg jeweils unabhängig aus der Gruppe, bestehend aus Alkyl, Aryl, Aralkyl, Alkaryl ausgewählt ist;
C) mindestens einen Aldehyd; sowie
D) mindestens eine weitere aromatische Verbindung, ausgewählt aus der Gruppe, bestehend aus Phenol, 2-Phenoxyethanol, 2-Phenoxyethylphosphat und -phosphonat, 2-Phenoxyessigsäure, 2-(2-Phenoxyethoxy)ethanol, 2-(2-Phenoxyethoxy)ethylphosphat und -phosphonat, 2-[4-(2-Hydroxyethoxy)phenoxy]ethylphosphat und -phosphonat, 2-[4-(2-Phosphonatooxyethoxy)phenoxy]ethylphosphat und -phosphonat, Methoxyphenol, Phenolsulfonsäure, Furfurylalkohol, sowie Mischungen davon.

2. Polykondensationsprodukt nach Anspruch 1, **dadurch gekennzeichnet, dass** die Gruppe Ar eine Arylgruppe mit 6 bis 10 Kohlenstoffatomen im Ringsystem ist, insbesondere eine Phenyl- oder eine Naphthylgruppe.

3. Polykondensationsprodukt nach Anspruch 1 oder 2, **dadurch gekennzeichnet, dass** m eine ganze Zahl von 3 bis 280 ist, vorzugsweise von 10 bis 160 und insbesondere von 12 bis 120.

4. Polykondensationsprodukt nach einem der Ansprüche 1 bis 3, **dadurch gekennzeichnet, dass** R₃ aus der Gruppe, bestehend aus H, C₁₋₁₀-Alkyl, C₆₋₁₀-Aryl, C₇₋₁₁-Aralkyl, C₇₋₁₁-Alkaryl und Phosphat ausgewählt ist, wobei R₃ vorzugsweise H ist.

5. Polykondensationsprodukt nach Anspruch 3, **dadurch gekennzeichnet, dass** die Oxyalkylengruppen des Arylpolyoxyalkylenethers der Formel (I) aus Ethylenoxid- und/oder Propylenoxidgruppen ausgewählt sind, welche statistisch, alternierend, graduell und/oder blockweise entlang der Kette angeordnet sind.

6. Polykondensationsprodukt nach Anspruch 3, **dadurch gekennzeichnet, dass** der Arylpolyoxyalkylenether der Formel (I) ein Polyethylenglykol-monophenylether der Formel (III) ist, 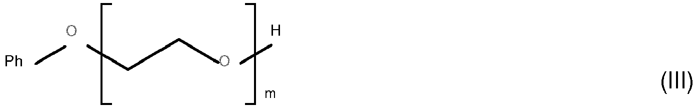 wobei m die angegebene Bedeutung aufweist.

7. Polykondensationsprodukt nach Anspruch 6, **dadurch gekennzeichnet, dass** der Polyethylenglykol-monophenylether der Formel (III) ein Gemisch mit unterschiedlichen m-Werten innerhalb der angegebenen Bedeutung ist.

8. Polykondensationsprodukt nach einem der Ansprüche 1 bis 7, **dadurch gekennzeichnet, dass** R₈ und R₉ jeweils unabhängig aus C₁₋₁₀-Alkyl, C₆₋₁₀-Aryl, C₇₋₁₁-Aralkyl und C₇₋₁₁-Alkaryl ausgewählt sind und vorzugsweise H sind.

9. Polykondensationsprodukt nach einem der Ansprüche 1 bis 8, **dadurch gekennzeichnet, dass** die aromatische Verbindung der Formel (II) aus der Gruppe, bestehend aus Benzen-1,2-diol, Benzen-1,2,3-triol, 2-Hydroxybenzoesäure, 2,3- und 3,4-Dihydroxybenzoesäure, 3,4,5-Trihydroxybenzoesäure, Phthalsäure, 3-Hydroxyphthalsäure, 2,3- und 3,4-Dihydroxybenzolsulfonsäure, 1,2- und 2,3-Dihydroxynaphthalin, 1,2- und 2,3-Dihydroxynaphthalin-5- oder -6-sulfonsäure, sowie Mischungen davon ausgewählt ist.

10. Polykondensationsprodukt nach einem der Ansprüche 1 bis 9, **dadurch gekennzeichnet, dass** die Aldehyd-Komponente C) aus der Gruppe, bestehend aus Formaldehyd, Paraformaldehyd, Glyoxylsäure, Benzaldehyd, Benzaldehydsulfonsäure, Benzaldehyddisulfonsäure, Vanillin und Isovanillin, sowie Mischungen davon ausgewählt ist.

11. Polykondensationsprodukt nach einem der Ansprüche 1 bis 10, **dadurch gekennzeichnet, dass** das Molverhältnis der Komponente C:(A+B) von 1:3 bis 3:1, vorzugsweise 1:2 bis 2:1 und insbesondere 1:0,9 bis 1:1,1 beträgt.

12. Polykondensationsprodukt nach einem der Ansprüche 1 bis 11, **dadurch gekennzeichnet, dass** das Molverhältnis der Komponenten A:B von 1:10 bis 10:1, vorzugsweise 1:7 bis 5:1 und insbesondere 1:5 bis 3:1 beträgt.

13. Polykondensationsprodukt nach einem der Ansprüche 1 bis 12 in Form eines Kammpolymers mit Novolak-Struktur.

14. Polykondensationsprodukt nach einem der Ansprüche 1 bis 13 mit einem Molekulargewicht im Bereich von 1000 bis 100000, vorzugsweise 2000 bis 75000 und insbesondere 4000 bis 50000 g/mol.

15. Verfahren zur Herstellung des Polykondensationsprodukts gemäß der Definition eines der Ansprüche 1 bis 14, **dadurch gekennzeichnet, dass** die Komponenten A), B), C) und D) in wässriger Lösung bei einer Temperatur von 20 bis 140 °C und einem Druck von 1 bis 10 bar polykondensiert werden.

16. Verfahren nach Anspruch 15, **dadurch gekennzeichnet, dass** die Polykondensation in Gegenwart eines sauren Katalysators, vorzugsweise ausgewählt aus der Gruppe, bestehend aus Schwefelsäure, Methansulfonsäure, p-Toluolsulfonsäure, Oxalsäure und Phosphorsäure, sowie Mischungen davon erfolgt.

17. Verfahren nach Anspruch 15 oder 16, **dadurch gekennzeichnet, dass** das Reaktionsgemisch nach Abschluss der Polykondensation einer Nachbehandlung bei einem pH-Wert von 8,0 bis 13,0, einer Temperatur von 60 bis 120 °C und vorzugsweise einem Druck von 0,01 bis 0,9 bar unterworfen wird.

18. Verfahren nach Anspruch 17, **dadurch gekennzeichnet, dass** der pH-Wert durch Zugabe einer Lauge wie z.B. NaOH eingestellt wird und die während der Neutralisation gebildeten Salze abgetrennt werden.

19. Verwendung des Polykondensationsprodukts gemäß der Definition eines der Ansprüche 1 bis 14 als Dispergiermittel für wässrige Suspensionen von anorganischen Bindemitteln, ausgewählt aus der Gruppe, umfassend hydraulische Bindemittel, latent hydraulische Bindemittel, puzzolanische Bindemittel, alkaliaktivierte und/oder alkaliaktivierbare Alumosilikatbindemittel, sowie Mischungen davon.

20. Verwendung nach Anspruch 19, **dadurch gekennzeichnet, dass**:
die hydraulischen Bindemittel aus Zementen, insbesondere aus Portlandzementen und Aluminatzementen, sowie Mischungen davon ausgewählt sind,
die latent hydraulischen Bindemittel aus industriellen und/oder synthetischen Schlacken, insbesondere aus Hochofenschlacke, Hüttensand, Hüttensandmehl, elektrothermischer Phosphorschlacke, Edelstahlschlacke, sowie Mischungen davon ausgewählt sind,
und die puzzolanischen Bindemittel aus amorpher Kieselsäure, vorzugsweise Fällungskieselsäure, pyrogener Kieselsäure und Mikrosilika, Glasmehl, Flugasche, vorzugsweise Braunkohleflugasche und Steinkohleflugasche, Metakaolin, natürlichen Puzzolanen wie Tuff, Trass und Vulkanasche, natürlichen und synthetischen Zeolithen, sowie Mischungen davon ausgewählt sind.

21. Verwendung nach Anspruch 19 oder 20, **dadurch gekennzeichnet, dass** die alkaliaktivierten Alumosilikatbindemittel latent hydraulische und/oder puzzolanische Bindemittel gemäß vorstehender Definition sowie alkalische Aktivatoren wie z.B. wässrige Lösungen von Alkalicarbonaten, Alkalifluoriden, Alkalihydroxiden, Alkalialuminaten, Alkalisilikaten wie z.B. löslichem Wasserglas, sowie Mischungen davon umfassen.

22. Verwendung nach einem der Ansprüche 19 bis 21 als Bestandteil von Baustoffrezepturen und/oder Baustofferzeugnissen wie Baustellenbeton, Betonfertigteilen, Betonwaren, Betonwerksteinen sowie Ortbeton, Spritzbeton, Transportbeton, Bauklebern und Wärmedämmverbundsystem-Klebern, Betonreparatursystemen, Einkomponenten- und Zweikomponenten-Dichtungsschlämmen, Estrichen, Spachtel- und Verlaufsmassen, Fliesenklebern, Putzen, Kleb- und Dichtstoffen, Beschichtungssystemen, insbesondere für Tunnel, Abwasserkanäle, Spritzschutz und Kondensatleitungen, Trockenmörteln, Fugenmörteln, Drainagemörteln und/oder Reparaturmörteln.

23. Verwendung des Polykondensationsprodukts gemäß der Definition eines der Ansprüche 1 bis 15 als Mahlhilfsmittel für anorganische Bindemittel, ausgewählt aus der Gruppe, umfassend hydraulische Bindemittel, latent hydraulische Bindemittel und puzzolanische Bindemittel gemäß vorstehender Definition und/oder alkaliaktivierbare Alumosilikatbindemittel, sowie Mischungen davon.

24. Verwendung nach einem der Ansprüche 19 bis 23 zusammen mit weiteren Hilfsmitteln, ausgewählt aus der Gruppe, umfassend Glykole, Polyalkohole, Aminalkohole, organische Säuren, Aminosäuren, Zucker, Melassen, organische und anorganische Salze, Polycarboxylatether, Naphthalinsulfonat, Melamin/Formaldehyd-Polykondensationsprodukte, Ligninsulfonat, sowie Mischungen davon.

## Claims

1. Polycondensation product comprising as monomer components:
A) at least one aryl polyoxyalkylene ether of the formula (I) 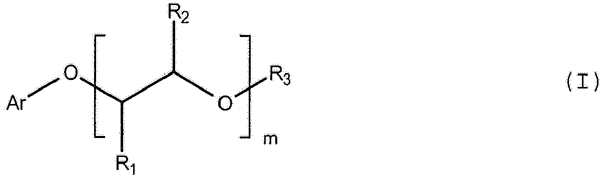 where
Ar is an aryl group,
R₁ and R₂ each independently of one another are selected from H, methyl and ethyl, with preferably at least one of the groups R₁ and R₂ being H,
m is an integer from 1 to 300 and
R₃ is selected from the group consisting of H, alkyl, aryl, aralkyl, alkaryl, phosphate, and also mixtures thereof;
B) at least one aromatic compound of the formula (II), 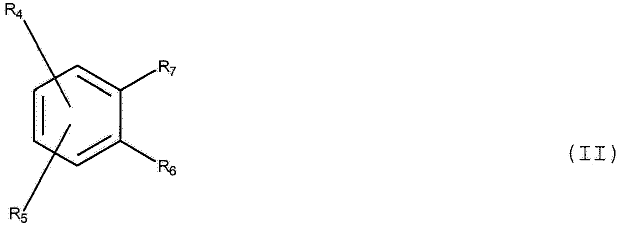 where R₄ and R₅ each independently of one another are selected from H, R₈, OH, OR₈, C(O)R₈, COOH, COOR₈, SO₃H, SO₃R₈ and NO₂ and also alkali metal salts, alkaline earth metal salts and ammonium salts thereof, or together are a further fused-on ring, where R₈ each independently is selected from the group consisting of alkyl, aryl, aralkyl, alkaryl, and R₆ and R₇ each independently of one another are selected from OH, OR₉, C(O)R₉, COOH and COOR₉ and also alkali metal salts and alkaline earth metal salts and ammonium salts thereof, where R₉ each independently is selected from the group consisting of alkyl, aryl, aralkyl, alkaryl;
C) at least one aldehyde; and also
D) at least one further aromatic compound, selected from the group consisting of phenol, 2-phenoxyethanol, 2-phenoxyethyl phosphate and phosphonate, 2-phenoxyacetic acid, 2-(2-phenoxyethoxy)ethanol, 2-(2-phenoxyethoxy)ethyl phosphate and phosphonate, 2-[4-(2-hydroxyethoxy)phenoxy]ethyl phosphate and phosphonate, 2-[4-(2-phosphonatooxyethoxy)phenoxy]ethyl phosphate and phosphonate, methoxyphenol, phenolsulphonic acid, furfuryl alcohol, and also mixtures thereof.

2. Polycondensation product according to Claim 1, **characterized in that** the group
Ar is an aryl group having 6 to 10 carbon atoms in the ring system, more particularly a phenyl group or a naphthyl group.

3. Polycondensation product according to Claim 1 or 2, **characterized in that** m is an integer from 3 to 280, preferably from 10 to 160 and more particularly from 12 to 120.

4. Polycondensation product according to any of Claims 1 to 3, **characterized in that** R₃ is selected from the group consisting of H, C₁₋₁₀ alkyl, C₆₋₁₀ aryl, C₇₋₁₁ aralkyl, C₇₋₁₁ alkaryl and phosphate, with R₃ preferably being H.

5. Polycondensation product according to Claim 3, **characterized in that** the oxyalkylene groups of the aryl polyoxyalkylene ether of the formula (I) are selected from ethylene oxide groups and/or propylene oxide groups, which are arranged randomly, alternatingly, graduatedly and/or blockwise along the chain.

6. Polycondensation product according to Claim 3, **characterized in that** the aryl polyoxyalkylene ether of the formula (I) is a polyethylene glycol monophenyl ether of the formula (III) 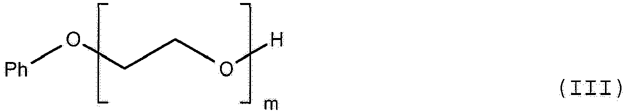 where m has the specified definition.

7. Polycondensation product according to Claim 6, **characterized in that** the polyethylene glycol monophenyl ether of the formula (III) is a mixture with different values for m within the specified definition.

8. Polycondensation product according to any of Claims 1 to 7, **characterized in that** R₈ and R₉ each independently are selected from C₁₋₁₀ alkyl, C₆₋₁₀ aryl, C₇₋₁₁ aralkyl and C₇₋₁₁ alkaryl and are preferably H.

9. Polycondensation product according to any of Claims 1 to 8, **characterized in that** the aromatic compound of the formula (II) is selected from the group consisting of benzene-1,2-diol, benzene-1,2,3-triol, 2-hydroxybenzoic acid, 2,3- and 3,4-dihydroxybenzoic acid, 3,4,5-trihydroxybenzoic acid, phthalic acid, 3-hydroxyphthalic acid, 2,3- and 3,4-dihydroxybenzenesulphonic acid, 1,2- and 2,3-dihydroxynaphthalene, 1,2- and 2,3-dihydroxynaphthalene-5- or -6-sulphonic acid, and also mixtures thereof.

10. Polycondensation product according to any of Claims 1 to 9, **characterized in that** the aldehyde component C) is selected from the group consisting of formaldehyde, paraformaldehyde, glyoxylic acid, benzaldehyde, benzaldehydesulphonic acid, benzaldehydedisulphonic acid, vanillin and isovanillin, and also mixtures thereof.

11. Polycondensation product according to any of Claims 1 to 10, **characterized in that** the molar ratio of components C: (A+B) is from 1:3 to 3:1, preferably 1:2 to 2:1 and more particularly 1:0.9 to 1:1.1.

12. Polycondensation product according to any of Claims 1 to 11, **characterized in that** the molar ratio of components A:B is from 1:10 to 10:1, preferably 1:7 to 5:1 and more particularly 1:5 to 3:1.

13. Polycondensation product according to any of Claims 1 to 12 in the form of a comb polymer with novolak structure.

14. Polycondensation product according to any of Claims 1 to 13, having a molecular weight in the range from 1000 to 100 000, preferably 2000 to 75 000 and more particularly 4000 to 50 000 g/mol.

15. Process for preparing the polycondensation product according to the definition of any of Claims 1 to 14, **characterized in that** components A), B), C) and D) are subjected to polycondensation in aqueous solution at a temperature of 20 to 140°C under a pressure of 1 to 10 bar.

16. Process according to Claim 15, **characterized in that** the polycondensation takes place in the presence of an acidic catalyst, preferably selected from the group consisting of sulphuric acid, methanesulphonic acid, p-toluenesulphonic acid, oxalic acid and phosphoric acid, and also mixtures thereof.

17. Process according to Claim 15 or 16, **characterized in that** after conclusion of the polycondensation, the reaction mixture is subjected to an aftertreatment at a pH of 8.0 to 13.0, at a temperature of 60 to 120°C and preferably under a pressure of 0.01 to 0.9 bar.

18. Process according to Claim 17, **characterized in that** the pH is adjusted by addition of an aqueous alkali, such as NaOH, and the salts formed during the neutralization are removed.

19. Use of the polycondensation product according to the definition of any of Claims 1 to 14 as a dispersant for aqueous suspensions of inorganic binders selected from the group encompassing hydraulic binders, latent hydraulic binders, pozzolanic binders, alkali-activated and/or alkali-activatable aluminosilicate binders, and also mixtures thereof.

20. Use according to Claim 19, **characterized in that**:
the hydraulic binders are selected from cements, more particularly from Portland cements and aluminate cements, and also mixtures thereof,
the latent hydraulic binders are selected from industrial and/or synthetic slags, more particularly from blast furnace slag, slag sand, ground slag sand, electrothermic phosphorus slag, stainless-steel slag, and also mixtures thereof,
and the pozzolanic binders are selected from amorphous silica, preferably precipitated silica, pyrogenic silica and microsilica, finely ground glass, fly ash, preferably brown-coal fly ash and mineral-coal fly ash, metakaolin, natural pozzolans such as tuff, trass and volcanic ash, natural and synthetic zeolites, and also mixtures thereof.

21. Use according to Claim 19 or 20, **characterized in that** the alkali-activated aluminosilicate binders comprise latent hydraulic and/or pozzolanic binders as defined above and also alkaline activators, such as aqueous solutions of alkali metal carbonates, alkali metal fluorides, alkali metal hydroxides, alkali metal aluminates, alkali metal silicates, such as soluble waterglass, and also mixtures thereof.

22. Use according to any of Claims 19 to 21 as a constituent of construction material formulations and/or construction material products such as onsite concrete, pre-cast concrete parts, concrete ware, cast concrete stones and also in-situ concrete, air-placed concrete, ready-mixed concrete, construction adhesives and adhesives for thermal insulation composite systems, concrete repair systems, one-component and two-component sealing slurries, screeds, filling and levelling compounds, tile adhesives, renders, adhesives and sealants, coating systems, more particularly for tunnels, wastewater channels, splash protection and condensate lines, dry mortars, joint grouts, drainage mortars and/or repair mortars.

23. Use of the polycondensation product according to the definition of any of Claims 1 to 15 as a grinding assistant for inorganic binders selected from the group encompassing hydraulic binders, latent hydraulic binders and pozzolanic binders as defined above and/or alkali-activatable aluminosilicate binders, and also mixtures thereof.

24. Use according to any of Claims 19 to 23 together with further auxiliaries selected from the group encompassing glycols, polyalcohols, amine alcohols, organic acids, amino acids, sugars, molasses, organic and inorganic salts, polycarboxylate ethers, naphthalenesulphonate, melamine/formaldehyde polycondensation products, lignosulphonate, and also mixtures thereof.

## Revendications

1. Produit de polycondensation, comprenant en tant que composants monomères :
A) au moins un éther d'arylpolyoxyalkylène de formule (I) 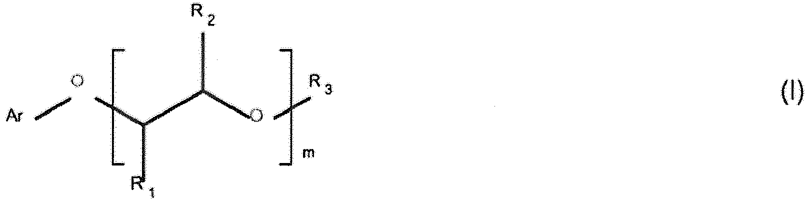 dans laquelle
Ar est un groupe aryle,
R₁ et R₂ sont chacun choisis indépendamment l'un de l'autre parmi H, méthyle et éthyle, au moins un des groupes R₁ et R₂ représentant de préférence H,
m est un nombre entier de 1 à 300, et
R₃ est choisi dans le groupe constitué par H, alkyle, aryle, aralkyle, alkaryle, phosphate, ainsi que leurs mélanges ;
B) au moins un composé aromatique de formule (II) 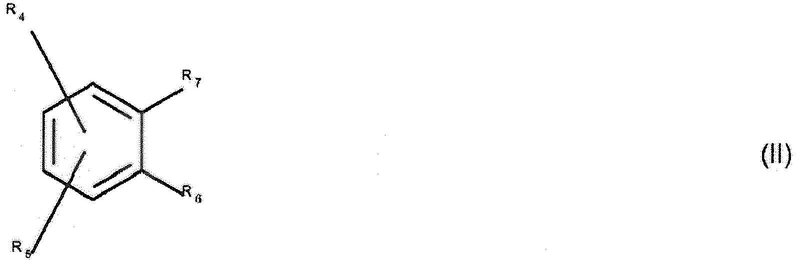 dans laquelle R₄ et R₅ sont chacun choisis indépendamment l'un de l'autre parmi H, R₈, OH, OR₈, C(O)R₈, COOH, COOR₈, SO₃H, SO₃R₈ et NO₂, ainsi que leurs sels alcalins, alcalino-terreux et d'ammonium, ou représentent ensemble un cycle annelé supplémentaire, les R₈ étant chacun choisis indépendamment dans le groupe constitué par alkyle, aryle, aralkyle, alkaryle, et R₆ et R₇ sont chacun choisis indépendamment l'un de l'autre parmi OH, OR₉, C(O)R₉, COOH et COOR₉, ainsi que leurs sels alcalins et alcalino-terreux et d'ammonium, les R₉ étant chacun choisis indépendamment dans le groupe constitué par alkyle, aryle, aralkyle, alkaryle ;
C) au moins un aldéhyde ; ainsi que
D) au moins un autre composé aromatique, choisi dans le groupe constitué par le phénol, le 2-phénoxyéthanol, le phosphate et le phosphonate de 2-phénoxyéthyle, l'acide 2-phénoxyacétique, le 2-(2-phénoxyéthoxy)éthanol, le phosphate et le phosphonate de 2-(2-phénoxyéthoxy)éthyle, le phosphate et le phosphonate de 2-[4-(2-hydroxyéthoxy)phénoxy]éthyle, le phosphate et le phosphonate de 2-[4-(2-phosphonatooxyéthoxy)phénoxy]éthyle, le méthoxyphénol, l'acide phénolsulfonique, l'alcool furfurylique, ainsi que leurs mélanges.

2. Produit de polycondensation selon la revendication 1, **caractérisé en ce que** le groupe Ar est un groupe aryle de 6 à 10 atomes de carbone dans le système cyclique, notamment un groupe phényle ou naphtyle.

3. Produit de polycondensation selon la revendication 1 ou 2, **caractérisé en ce que** m est un nombre entier de 3 à 280, de préférence de 1 à 160 et notamment de 12 à 120.

4. Produit de polycondensation selon l'une quelconque des revendications 1 à 3, **caractérisé en ce que** R₃ est choisi dans le groupe constitué par H, alkyle en C₁₋₁₀, aryle en C₆₋₁₀, aralkyle en C₇₋₁₁, alkaryle en C₇₋₁₁ et phosphate, R₃ étant de préférence H.

5. Produit de polycondensation selon la revendication 3, **caractérisé en ce que** les groupes oxyalkylène de l'éther d'arylpolyoxyalkylène de formule (I) sont choisis parmi les groupes oxyde d'éthylène et/ou oxyde de propylène, qui sont agencés statistiquement, en alternance, graduellement et/ou séquentiellement le long de la chaîne.

6. Produit de polycondensation selon la revendication 3, **caractérisé en ce que** l'éther d'arylpolyoxyalkylène de formule (I) est un éther monophénylique de polyéthylène glycol de formule (III) 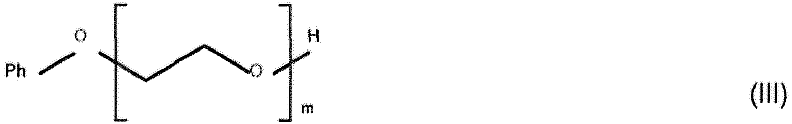 dans laquelle m a la signification indiquée.

7. Produit de polycondensation selon la revendication 6, **caractérisé en ce que** l'éther monophénylique de polyéthylène glycol de formule (III) est un mélange avec différentes valeurs de m dans le cadre de la signification indiquée.

8. Produit de polycondensation selon l'une quelconque des revendications 1 à 7, **caractérisé en ce que** R₈ et R₉ sont chacun choisis indépendamment parmi alkyle en C₁₋₁₀, aryle en C₆₋₁₀, aralkyle en C₇₋₁₁ et alkaryle en C₇₋₁₁, et sont de préférence H.

9. Produit de polycondensation selon l'une quelconque des revendications 1 à 8, **caractérisé en ce que** le composé aromatique de formule (II) est choisi dans le groupe constitué par le benzène-1,2-diol, le benzène-1,2,3-triol, l'acide 2-hydroxybenzoïque, l'acide 2,3- et 3,4-dihydroxybenzoïque, l'acide 3,4,5-trihydroxybenzoïque, l'acide phtalique, l'acide 3-hydroxyphtalique, l'acide 2,3- et 3,4-dihydroxybenzènesulfonique, la 1,2- et 2,3-dihydroxynaphtaline, l'acide 1,2- et 2,3-dihydroxynaphtaline-5- ou -6-sulfonique, ainsi que leurs mélanges.

10. Produit de polycondensation selon l'une quelconque des revendications 1 à 9, **caractérisé en ce que** le composant aldéhyde C) est choisi dans le groupe constitué par le formaldéhyde, le paraformaldéhyde, l'acide glyoxylique, le benzaldéhyde, l'acide benzaldéhyde-sulfonique, l'acide benzaldéhyde-disulfonique, la vaniline et l'isovaniline, ainsi que leurs mélanges.

11. Produit de polycondensation selon l'une quelconque des revendications 1 à 10, **caractérisé en ce que** le rapport molaire entre les composants C:(A+B) est de 1:3 à 3:1, de préférence de 1:2 à 2:1 et notamment de 1:0,9 à 1:1,1.

12. Produit de polycondensation selon l'une quelconque des revendications 1 à 11, **caractérisé en ce que** le rapport molaire entre les composants A:B est de 1:10 à 10:1, de préférence de 1:7 à 5:1 et notamment de 1:5 à 3:1.

13. Produit de polycondensation selon l'une quelconque des revendications 1 à 12, sous la forme d'un polymère en peigne de structure novolaque.

14. Produit de polycondensation selon l'une quelconque des revendications 1 à 13, ayant un poids moléculaire dans la plage allant de 1 000 à 100 000, de préférence de 2 000 à 75 000 et notamment de 4 000 à 50 000 g/mol.

15. Procédé de fabrication du produit de polycondensation selon la définition de l'une quelconque des revendications 1 à 14, **caractérisé en ce que** les composants A), B), C) et D) sont polycondensés dans une solution aqueuse à une température de 20 à 140 °C et à une pression de 1 à 10 bar.

16. Procédé selon la revendication 15, **caractérisé en ce que** la polycondensation a lieu en présence d'un catalyseur acide, de préférence choisi dans le groupe constitué par l'acide sulfurique, l'acide méthanesulfonique, l'acide p-toluènesulfonique, l'acide oxalique et l'acide phosphorique, ainsi que leurs mélanges.

17. Procédé selon la revendication 15 ou 16, **caractérisé en ce que** le mélange réactionnel est soumis à un post-traitement à un pH de 8,0 à 13,0, à une température de 60 à 120 °C et de préférence à une pression de 0,01 à 0,9 bar après la fin de la polycondensation.

18. Procédé selon la revendication 17, **caractérisé en ce que** le pH est ajusté par ajout d'une base telle que p. ex. NaOH et les sels formés pendant la neutralisation sont séparés.

19. Utilisation du produit de polycondensation selon la définition de l'une quelconque des revendications 1 à 14 en tant qu'agent de dispersion pour des suspensions aqueuses de liants inorganiques, choisis dans le groupe comprenant les liants hydrauliques, les liants hydrauliques latents, les liants pouzzolaniques, les liants alumosilicates activés par un alcali et/ou activables par un alcali, ainsi que leurs mélanges.

20. Utilisation selon la revendication 19, **caractérisée en ce que** :
les liants hydrauliques sont choisis parmi les ciments, notamment parmi les ciments Portland et les ciments aluminates, ainsi que leurs mélanges,
les liants hydrauliques latents sont choisis parmi les scories industrielles et/ou synthétiques, notamment les scories de hauts fourneaux, le laitier granulé, la farine de laitier granulé, les scories de phosphore électrothermiques, les scories d'acier inoxydable, ainsi que leurs mélanges,
et les liants pouzzolaniques sont choisis parmi la silice amorphe, de préférence la silice précipitée, la silice pyrogénée et la microsilice, la farine de verre, les cendres volantes, de préférence les cendres volantes de lignite et les cendres volantes de houille, le métakaolin, les pouzzolanes naturels tels que le tuf, le trass et les cendres volcaniques, les zéolithes naturelles et synthétiques, ainsi que leurs mélanges.

21. Utilisation selon la revendication 19 ou 20, **caractérisée en ce que** les liants alumosilicates activés par un alcali comprennent les liants hydrauliques latents et/ou pouzzolaniques selon la définition précédente, ainsi que les activateurs alcalins, tels que p. ex. les solutions aqueuses de carbonates alcalins, de fluorures alcalins, d'hydroxydes alcalins, d'aluminates alcalins, de silicates alcalins, tels que p. ex. le verre soluble, ainsi que leurs mélanges.

22. Utilisation selon l'une quelconque des revendications 19 à 21 en tant que constituant de formulations de matériaux de construction et/ou produits de matériaux de construction, tels que le béton de chantier, les éléments préfabriqués en béton, les produits en béton, les pierres de taille en béton, ainsi que le béton coulé en place, le béton projeté, le béton prêt à l'emploi, les colles de construction et les colles de systèmes composites d'isolation thermique, les systèmes de réparation de béton, les boues d'étanchéité monocomposantes et bicomposantes, les chapes, les enduits et les matériaux de nivellement, les colles à carreaux, les crépis, les agents adhésifs et d'étanchéité, les systèmes de revêtement, notamment pour tunnels, canaux d'eaux usées, protections anti-éclaboussure et conduites de condensat, les mortiers secs, les mortiers à joint, les mortiers drainants et/ou les mortiers de réparation.

23. Utilisation du produit de polycondensation selon la définition de l'une quelconque des revendications 1 à 15 en tant qu'adjuvant de broyage pour liants inorganiques, choisis dans le groupe comprenant les liants hydrauliques, les liants hydrauliques latents et les liants pouzzolaniques selon la définition précédente et/ou les liants alumosilicates activables par un alcali, ainsi que leurs mélanges.

24. Utilisation selon l'une quelconque des revendications 19 à 23, conjointement avec d'autres adjuvants, choisis dans le groupe comprenant les glycols, les polyalcools, les aminoalcools, les acides organiques, les acides aminés, les sucres, les mélasses, les sels organiques et inorganiques, les éthers de polycarboxylate, le sulfonate de naphtaline, les produits de polycondensation de mélamine/formaldéhyde, le sulfonate de lignine, ainsi que leurs mélanges.
